# EUROPÄISCHE PATENTSCHRIFT

(11) **EP 3 666 382 B1**
(45) Veröffentlichungstag und Bekanntmachung des Hinweises auf die Patenterteilung: **04.12.2024**
(21) Anmeldenummer: 19000554.6
(22) Anmeldetag: 11.12.2019
(51) Int. Cl.: B02C 17/14, B02C 17/18, B02C 21/00

(54) **LEICHT HANDHABBARE VEREDELUNG EINER PFLANZENKOHLE IN EINER ZERKLEINERUNGSVORRICHTUNG MIT HOHER NACHHALTIGKEIT DER VERWERTUNG IN FUTTERMITTELN UND ARZNEIMITTELN**
SIMPLE REFINEMENT OF BIOCHAR IN A CRUSHING DEVICE WITH HIGH SUSTAINABILITY OF USE IN FEED AND DRUGS
RAFFINEMENT FACILE À MANIPULER D'UN BIOCHAR DANS UN DISPOSITIF DE BROYAGE À SOUTENABILITÉ ÉLEVÉE DE L'UTILISATION DANS LES ALIMENTS POUR ANIMAUX ET LES MÉDICAMENTS

(30) Priorität: 12.12.2018 DE 102018009752
(43) Veröffentlichungstag der Anmeldung: 17.06.2020
(73) Patentinhaber: Nienhaus, Hugo, 46414 Rhede (DE)
(72) Erfinder: Nienhaus, Hugo, 46414 Rhede (DE)
(74) Vertreter: Schatz, Markus Franz-Josef

(56) Entgegenhaltungen:
- CN-A- 103 815 176
- CN-U- 205 042 552
- US-A- 3 078 050
- US-A- 3 514 907
- US-A1- 2016 137 939
- US-A1- 2018 126 349
- HANS-PETER SCHMIDT: "Der Einsatz von Pflanzenkohle in der Tierfütterung", ITHAKA JOURNAL, 19 March 2016 (2016-03-19), pages 364 - 394, XP055605180, Retrieved from the Internet <URL:https://freisl-kraftfutter.de/wp-content/uploads/2017/10/Schmidt_et_al_2016_Einsatz-von-Pflanzenkohle-in-der-Tierfütterung.pdf> [retrieved on 20190715]

## Beschreibung

Die Erfindung betrifft eine leicht handhabbare Veredelung einer Pflanzenkohle in einer Zerkleinerungsvorrichtung, welche zwei Kugelmühlen umfasst, wobei die erste Kugelmühle einen einen Einlass zur Beschickung eines Mahlbehälters mit einem ersten Mahlgut, vorzugsweise Pflanzenkohle, und den einen Auslass aufweisenden Mahlbehälter mit einem Mahlraum, mindestens ein Antriebsaggregat und eine Trenneinrichtung umfasst, das Antriebsaggregat an dem Mahlbehälter zum Antreiben desselben gekoppelt ist zur Erzeugung von Bewegungen des Mahlbehälters und/oder Mahlkugeln, der Mahlbehälter einen Boden und eine Mahlbehälterwand aufweist, an dem Boden die Mahlbehälterwand angeformt ist, die dem Mahlraum zugewandte Innenwand der Mahlbehälterwand im Querschnitt nach außen gewölbt, vorzugsweise teilkreisförmig, wie halbkreisförmig, ausgestaltet, ist, ein Teil des Bodens des Mahlbehälters als Auslass zur Weiterleitung der behandelten Pflanzenkohle mit einem ersten Sieb über eine mit dem Auslass verbundene Leitung an einen Einlass einer zweiten Kugelmühle ausgebildet ist, sowie ein Verfahren zur Veredelung von Pflanzenkohle.

Eine Zerkleinerungsvorrichtung ist aus US 3078050 A bekannt.

In der Viehwirtschaft bestehen hohe Anforderungen an Futtermittel, um einen möglichst hohen ernährungsphysiologischen Wert bereitzuhalten, so dass in der Viehwirtschaft die im Einsatz befindlichen Nutztiere, wie Rinder, z.B. Hochleistungsrinder, Pferde, Schafe, Ziegen, in Bezug auf die Darreichung an Nährstoffen, wie Proteinen, Aminosäuren, Cellulose, Vitaminen, Kohlehydraten, Mineralien, usw. umfassend zu versorgen. Gerade die Verfügbarkeit von Nährstoffen ist bei Futtermitteln sehr wichtig, da der Organismus der Nutztiere nur in Gegenwart dieser Nährstoffe die erwünschten Maßgaben, wie Milch- und Fleischproduktion, erhalten kann. So zeigt sich, dass beispielsweise die Aminosäuren als Bausteine von Proteinen in Futtermitteln in unterschiedlichen Mengen dem Organismus der Rinder zur Verfügung gestellt werden. Die Menge der zur Verfügung zustellenden Aminosäuren aus den Futtermitteln kann ggf. durch Zusatzstoffe erhöht werden, da diese im Verdauungstrakt das Aufschließen der Futtermitteln erleichtern können.

So ist auch bekannt, dass die fettlöslichen Vitamine aus den Futtermitteln erst in Gegenwart von Fetten, Karotin, usw. dem Organismus zur Verfügung gestellt werden. Die Nährstoffe aus den im Verdauungstrakt mittels Bakterien, Enzymen usw. aufgeschlossenen Futtermitteln werden im Organismus weiterverarbeitet. Die Verdauungstraktflora aus Bakterien ist darüber hinaus wesentlich für die Aufnahme von Nährstoffen aus dem Futtermittel nach deren Aufarbeitung im Verdauungstrakt der Nutztiere. Daher ist die Viehwirtschaft bestrebt, Zusatzstoffe dem Futtermittel beizumengen, um eine Aufarbeitung, wie Aufschließen, des Futtermittels in dem Verdauungstrakt der Nutztiere zu erleichtern und die Futtermittel möglichst umfassend mit all ihnen zur Verfügung stehenden Substanzen dem Organismus des Nutztieres darzureichen.

In der Vergangenheit wurde beobachtet, dass zur Stabilisierung der enzymatischen Vorgänge im Verdauungstrakt der Nutztiere, insbesondere bei Rindern, die Zugabe von Flüssigkeit mit holzkohlehaltigen Substanzen zwar zu einer, wenn auch unzureichenden, Stabilisierung der enzymatischen Vorgänge im Verdauungstrakt der Nutztiere führt. Die Stabilisierung der enzymatischen Vorgänge im Verdauungstrakt der Nutztiere ist aber nur verschwindend gering.

Daher ist man bisher bestrebt, wenn auch ohne Erfolg, Substanzen, wie holzkohlehaltige Substanzen, in ihrer Zusammensetzung zu ändern, in der Hoffnung, die enzymatische Vorgänge, bedingt durch Bakterien, körpereigene Enzyme usw., im Verdauungstrakt der Nutztiere zu fördern.

Aufgabe der Erfindung ist es, die o.g. Nachteile des Stands der Technik zu beseitigen.

Daher ist es zudem Aufgabe der Erfindung, einen derartigen Zusatzstoff derart bereitzustellen, dass der Zusatzstoff das Aufschließen von Futtermittel in die Nährstoffe, wie Cellulose, Kohlehydraten, Mineralien, Vitaminen, usw., aus dem Futtermittel unterstützt.

Des Weiteren ist es Aufgabe der Erfindung, einen derartigen Zusatzstoff derart bereitzustellen, dass der Zusatzstoff das Aufarbeiten, wie die Degradation, der aus dem Futtermittel aufgeschlossenen Nährstoffe, wie Cellulose, Kohlehydrate, Mineralien, Vitamine, usw., ebenso unterstützt und fördert.

Hinzukommend soll der Zusatzstoff die Aufnahme der derartig aufgearbeiteten Nährstoffe aus dem Verdauungstrakt in den Organismus des Nutztieres erleichtern oder fördern.

Verschiedentlich wurden auch im Stand der Technik aus Holz verkohlte Holzkohle als Zusatzstoff dem Futtermittel beigemengt, jedoch zeigte sich nur eine sehr geringe Wirkung dieses Zusatzstoffes auf den Aufschluss der Futtermittel und Darreichung solcherart von mit dem herkömmlichen Zusatzstoff vermischten Futtermitteln, dass diese Art von Zusatzstoffen als wenig erfolgversprechend erachtet wird.

Die im Stand der Technik bekannten Methoden der Zerkleinerung von aus Holz verkohlter Pflanzenkohle stellen zwar zerkleinerte Pflanzenkohle bereit, die aber zu keiner wirkungsvollen Unterstützung der Verdauung der Futtermittel im Verdauungstrakt der Nutztiere führte.

Daher ist es auch Aufgabe der Erfindung einen Zusatzstoff, wie Pflanzenkohle, derart aufzuarbeiten und damit zu veredeln, der in der Lage ist, nicht nur das Futtermittel und dessen Aufarbeitung im Verdauungstrakt von Nutztieren zu erleichtern, sondern auch möglichst umfassend, also quantitativ, die in dem Futtermittel enthaltenen Nährstoffe dem Organismus zu überführen.

So wurde die **eine** mittels herkömmlicher Verfahren hergestellte Pflanzenkohle mit herkömmlichen Trommelmühlen, wie Kugelmühlen, zerkleinert. Die herkömmlichen Kugelmühlen weisen, **eine** Trommelmühle **und** als Mahlkörper Stangen von vieleckigem Querschnitt auf, die sich in dem drehenden Trommelkörper befinden, welcher eine vieleckige, geometrisch dem Mahlkörperquerschnitt ähnliche, vorzugsweise sechseckige, Querschnittsform hat. Die mit dieser Kugelmühle hergestellte Pflanzenkohle verbleibt wirkungslos in Bezug auf die Aufarbeitung von Futtermittel in dem Verdauungstrakt der Nutztiere.

Auch die mit Hilfe der in der DE 290 409 offenbarten Trommelmühle bereitgestellte Pflanzenkohle nutzt eine Kugelmühle, die aus einer die Pflanzenkohle aufnehmenden Trommel und mindestens einem darin lose liegenden, nahezu die ganze Länge der Trommel einnehmenden Schlägel besteht, der beim Umlauf der Trommel wechselweise gehoben wird und durch sein Eigengewicht auf das Gut zurückfällt, sodass die mit glatter Innenwand versehene Zerkleinerungstrommel drei- oder vierseitigen Querschnitts zerkleinerte Pflanzenkohle herstellte, die bereits äußerlich von unterschiedlicher Gestalt ist. Die mit dieser Kugelmühle hergestellte Pflanzenkohle ist wirkungslos in Bezug auf die Aufarbeitung von Futtermittel in dem Verdauungstrakt der Nutztiere.

Ebenfalls umfasst die in EP 3 057 710 B1 offenbarte Zerkleinerungsvorrichtung eine Kugelmühle, die aus einem in Rotation versetzten Mahlraum besteht, in dem das Mahlgut durch Mahlkörper zerkleinert wird. Die herkömmliche Kugelmühle weist einen Mahlbehälter auf, der aus einer horizontal drehbar gelagerten annähernd kreiszylindrischen Wand gestaltet ist und durch eine zentrale Öffnung in einer der Stirnwände des Mahlbehälters, dem sogenannten Mahlguteinlass, mit der zu behandelnden Holzkohle beschickt wird. Die mit dieser Kugelmühle hergestellte Pflanzenkohle ist ohne Wirkung auf die Aufarbeitung von Futtermittel in dem Verdauungstrakt der Nutztiere.

Daher ist es auch Aufgabe der Erfindung, die Pflanzenkohle derart zu veredeln, dass in der bereitzustellenden Kugelmühle und in dem bereitzustellenden Verfahren möglichst vielfältige Einwirkungsmöglichkeiten auf das Mahlgut bereitgestellt werden, um eine gründliche und gleichmäßige Feinstzerkleinerung und Dispergierung der Pflanzenkohle zur Erhöhuing der physiologischen Wirkung zu erreichen.

So wird auch in der DE 29 32 783 eine Rührwerkskugelmühle zum Feinmahlen, Dispergieren, Homogenisieren und Emulgieren verwendet mit Überwachung verschiedenster Betriebsparameter, wie Temperatur, Förderdruck, Durchsatzmenge, Volumen des Mahlbehälters usw., um homogene Pflanzenkohle einheitlicher Größe und Güte bereitzuhalten; auch die mittels dieser Rührwerkskugelmühle zerkleinerte Pflanzenkohle zeigte als Zusatzstoffe in Futtermitteln keine Wirkung.

Aufgabe der Erfindung ist es zudem, homogene Pflanzenkohle bereitzuhalten, die eine derartige Gestalt Größe und Zusammensetzung aufweist, dass sie sich als Zusatzstoff in Futtermitteln besonders eignet.

Ebenso ist es Ziel der Erfindung, die Pflanzenkohle in einer derartigen Zusammensetzung bereitzustellen, die einfach herstellbar, zuverlässig zu einander übereinstimmenden veredelten Pflanzenkohlen führt.

Ebenfalls soll das Verfahren zur Herstellung der Pflanzenkohle preiswert zu wiederholbaren Ergebnissen führen, ohne dass es der steten Kontrolle der durch das Verfahren bereitgestellten Endprodukte erforderlich ist.

Die Aufgaben werden gelöst durch den Hauptanspruch und den Nebenanspruch. Die Unteransprüche betreffen bevorzugte Ausgestaltungen und Weiterentwicklung der Erfindung.

Die Erfindung betrifft eine leicht handhabbare Zerkleinerungsvorrichtung zur Veredelung, vorzugsweise Pulverisierung, einer Pflanzenkohle, welche mindestens, vorzugsweise zwei, Kugelmühlen umfasst, wobei
die erste Kugelmühle zur Herstellung von Pflanzenkohleteilchen einen einen Einlass zur Beschickung eines Mahlbehälters der ersten Kugelmühle mit einem ersten Mahlgut, vorzugsweise einer Pflanzenkohle, und den einen Auslass aufweisenden Mahlbehälter mit einem Mahlraum, mindestens ein Antriebsaggregat und eine Trenneinrichtung umfasst,
das Antriebsaggregat an dem Mahlbehälter zum Antreiben desselben gekoppelt ist zur Erzeugung von Bewegungen des Mahlbehälters, der Mahlbehälter einen Boden und eine Mahlbehälterwand aufweist, an dem Boden die Mahlbehälterwand angeformt ist,
die dem Mahlraum zugewandte Innenseite der Mahlbehälterwand im Querschnitt nach außen gewölbt, vorzugsweise teilkreisförmig, wie halbkreisförmig, ausgestaltet ist;
ein Teil des Bodens des Mahlbehälters als Auslass zur Weiterleitung der Pflanzenkohleteilchen ausgebildet ist, welcher über eine mit dem Auslass verbundene Leitung an einen Einlass einer zweiten Kugelmühle verbunden ist,
welche dadurch gekennzeichnet ist, dass
der Auslass ein erstes Sieb als Trenneinrichtung der ersten Kugelmühle zur Trennung der Pflanzenkohleteilchen von Rückständen aufweist,
die Durchbrüche des ersten Siebes der ersten Kugelmühle einander übereinstimmen, in Draufsicht länglich und eckig ausgestaltet und parallel zueinander ausgerichtet sind,
der Abstand A der gegenüberliegenden langen die Durchbrüche begrenzenden Durchbruchswände des ersten Siebes voneinander eine lichte Weiten oder einen Abstand von 1,1 bis 6,0 mm, vorzugsweise 1,2 bis 4,0 mm, noch mehr bevorzugt 1,5 mm oder 2,5 mm, beträgt,
eine der Abstand B der gegenüberliegenden kurzen die Durchbrüche begrenzenden Durchbruchswände des ersten Siebes voneinander eine lichte Weiten oder einen Abstand 2,0 bis 7,0 mm, vorzugsweise 2,5 bis 5,0 mm oder 2,5 bis 6,0 mm, noch mehr bevorzugt 3,0 mm oder 3,5 mm oder 4,5 mm, beträgt,
in einem Bereich der dem Einlass der zweiten Kugelmühle zugewandten Außenseite der Trenneinrichtung ein Grobsieb mit einem die Mahlkugeln zurückhaltenden Durchbruch als Durchtrittsöffnung für die Pflanzenkohleteilchen, der kleiner ist als der Durchmesser der Kugeln der ersten Kugelmühle, in der Leitung angeordnet ist,
die zweite Kugelmühle einen Einlass zur Beschickung eines Mahlbehälters mit den Pflanzenkohleteilchen aus der ersten Kugelmühle und einen Auslass aufweisenden Mahlbehälter mit einem Mahlraum, ein Antriebsaggregat und eine Trenneinrichtung umfasst,
das Antriebsaggregat an dem Mahlbehälter gekoppelt ist zur Erzeugung von Bewegungen des Mahlbehälters, der Mahlbehälter einen Boden und eine Mahlbehälterwand aufweist, an dem Boden die Mahlbehälterwand angeformt ist,
die dem Mahlraum zugewandte Innenwand des Mahlbehälterwand im Querschnitt nach außen gewölbt, vorzugsweise teilkreisförmig, wie halbkreisförmig, ausgestaltet ist, ist,
der Auslass ein zweites Sieb als Trenneinrichtung zur Klassierung der behandelten Pflanzenkohleteilchen aufweist,
die Trenneinrichtung der zweiten Kugelmühle als zweites Sieb ein Gitter mit einem metallenen Werkstoff und ein Gitterlage mit Kunststoffen aufweist, welches Gitter auf der dem Mahlbehälter der zweiten Kugelmühle zugewandten Außenseite der Gitterlage aufliegt und in Draufsicht quadratische Durchbrüche aufweist, die Durchbrüche einander übereinstimmen und als Maße C von 0,8 bis 1,3mm x 0,8 bis 1,3 mm, vorzugsweise 1,0 bis 1,2 x 1,0 bis 1,2mm, noch mehr bevorzugt 1,1 x 1,1 mm oder 1,1 x 1,1 mm, aufweisen
   und / oder
die Mahlbehälter Mahlkugeln enthalten, die Mahlkugeln der ersten Kugelmühle einen geringeren Durchmesser als die Mahlkugeln der zweiten Kugelmühle oder einen mit dem Durchmesser der Mahlkugeln der zweiten Kugelmühle identischen Durchmesser aufweisen.

Zudem ist die Erfindung gerichtet auf die Zerkleinerungsvorrichtung zur Veredelung von Pflanzenkohle zu Pflanzenkohlepulver, welche mindestens eine, vorzugsweise mindestens zwei, Kugelmühlen umfasst, wobei
die erste Kugelmühle einen einen Mahlraum aufweisenden Mahlbehälter mit einem Einlass zur Beschickung desselben mit einem ersten Mahlgut, vorzugsweise mit Pflanzenkohle, und einem Auslass zur Abgabe von Pflanzenkohleteilchen, ein Antriebsaggregat und eine Trenneinrichtung umfasst,
das Antriebsaggregat an dem Mahlbehälter zum Antreiben desselben gekoppelt ist zur Erzeugung von, vorzugsweise vibrierenden, Bewegungen des Mahlbehälters und /oder Mahlkugeln in demselben,
der Mahlbehälter einen Boden und eine Mahlbehälterwand aufweist,
an dem Boden die Mahlbehälterwand angeformt ist,
welche dadurch gekennzeichnet ist, dass
vorzugsweise die dem Mahlraum zugewandte Innenwand oder -seite der Mahlbehälterwand im Querschnitt nach außen gewölbt, vorzugsweise teilkreisförmig, ausgestaltet, ist,
ein Teil des Bodens des Mahlbehälters als Auslass zur Weiterleitung der behandelten Pflanzenkohle als Pflanzenkohleteilchen über eine mit dem Auslass verbundene Leitung an einen Einlass eines Mahlbehälter einer zweiten Kugelmühle ausgebildet ist,
der Auslass ein erstes Sieb als Trenneinrichtung zur Trennung der behandelten Pflanzenkohle von Rückständen, wie Fremdstoffen, aufweist,
der einen Mahlraum aufweisende Mahlbehälter der zweiten Kugelmühle den Einlass zur Beschickung desselben mit Pflanzenkohleteilchen aus der ersten Kugelmühle und einen Auslass, ein Antriebsaggregat und eine Trenneinrichtung umfasst,
das Antriebsaggregat an dem Mahlbehälter zum Antreiben desselben gekoppelt ist zur Erzeugung von, vorzugsweise vibrierenden, Bewegungen des Mahlbehälters und/oder Mahlkugeln in demselben,
der Mahlbehälter einen Boden und eine Mahlbehälterwand aufweist,
an dem Boden die Mahlbehälterwand angeformt ist,
vorzugsweise die dem Mahlraum zugewandte Innenwand oder -seite der Mahlbehälterwand im Querschnitt nach außen gewölbt, vorzugsweise teilkreisförmig, wie Halbkreisförmig; ausgestaltet, ist,
der Auslass des Mahlbehälters der zweiten Kugelmühle ein zweites Sieb als Trenneinrichtung zur Klassierung des aus Pflanzenkohleteilchen bereitgestellten Pflanzenkohlepulvers aufweist,
die Mahlbehälter Mahlkugeln enthalten,
die Mahlkugeln der ersten Kugelmühle einen geringeren Durchmesser als die Mahlkugeln der zweiten Kugelmühle aufweisen.

Ein weiterer Gegenstand der Erfindung ist gerichtet auf Pflanzenkohlepulver, herstellbar oder hergestellt mit Hilfe der leicht handhabbaren Zerkleinerungsvorrichtung zur Veredelung, wie Pulverisierung, von Pflanzenkohle, welche zwei Kugelmühlen umfasst, wobei
die erste Kugelmühle einen einen Einlass zur Beschickung eines Mahlbehälters mit einem ersten Mahlgut, vorzugsweise Pflanzenkohle, und den einen Auslass aufweisenden Mahlbehälter mit einem Mahlraum, ein Antriebsaggregat und eine Trenneinrichtung umfasst, das Antriebsaggregat an dem Mahlbehälter zum Antreiben desselben gekoppelt ist zur Erzeugung von, vorzugsweise vibrierenden, Bewegungen des Mahlbehälters, der Mahlbehälter einen Boden und eine Mahlbehälterwand aufweist, an dem Boden die Mahlbehälterwand angeformt ist,
welche dadurch gekennzeichnet ist, dass
die dem Mahlraum zugewandte Innenwand der Mahlbehälterwand im Querschnitt nach außen gewölbt, vorzugsweise teilkreisförmig, ausgestaltet, ist,
ein Teil des Bodens des Mahlbehälters als Auslass zur Weiterleitung der behandelten Pflanzenkohle über eine mit dem Auslass verbundene Leitung an einen Einlass einer zweiten Kugelmühle ausgebildet ist,
der Auslass ein erstes, vorzugsweise verschließbares, Sieb als Trenneinrichtung zur Trennung der behandelten Pflanzenkohle von Rückständen, wie Fremdstoffen, aufweist,
die zweite Kugelmühle den Einlass zur Beschickung eines Mahlbehälters mit der behandelten Pflanzenkohle aus der ersten Kugelmühle und einen einen Auslass aufweisenden Mahlbehälter mit einem Mahlraum, ein Antriebsaggregat und eine Trenneinrichtung umfasst,
das Antriebsaggregat an dem Mahlbehälter gekoppelt ist zur Erzeugung von, vorzugsweise vibrierenden, Bewegungen des Mahlbehälters,
der Mahlbehälter einen Boden und eine Mahlbehälterwand aufweist,
an dem Boden die Mahlbehälterwand angeformt ist, die dem Mahlraum zugewandte Innenwand des Mahlbehälterwand im Querschnitt nach außen gewölbt, vorzugsweise teilkreisförmig ausgestaltet, ist,
der Auslass ein zweites, vorzugsweise verschließbares, Sieb als Trenneinrichtung zur Klassierung des aus Pflanzenkohleteilchen bereitgestellten Pflanzenkohlepulvers aufweist,
die Mahlbehälter Mahlkugeln enthalten,
die Mahlkugeln der ersten Kugelmühle einen geringeren Durchmesser als die Mahlkugeln der zweiten Kugelmühle aufweisen.

Ein anderer Gegenstand der Erfindung ist gerichtet auch auf eine Pflanzenkohlepulverisierungsanlage zur Herstellung und Veredelung, wie Pulverisierung, von Pflanzenkohle zu Pflanzenkohlepulver,
die eine Anlage zur Herstellung von Pflanzenkohle aus Biomasseteilchen in einer Schüttung als Wanderbett mit einem Schachtreaktor mit einem ein Kopfende und ein Fußende umfassenden Schachtreaktormantel zur Aufnahme der Pflanzenkohle und einer Auffangeinrichtung sowie eine mit der Auffangeinrichtung der Anlage verbundene Zerkleinerungsvorrichtung umfasst,
die Anlage umfasst mindestens eine Teilchenfördereinrichtung zur Beförderung der Biomasseteilchen in den Schachtreaktor,
mindestens eine Belüftungsdosiereinrichtung zur Zuführung der Luft in den Schachtreaktor,
das Kopfende des Schachtreaktors eine Eintragsöffnung und das Fußende des Schachtreaktors eine Austragsöffnung aufweisen,
ein mittiger Abschnitt zwischen dem Kopfende und dem Fußende sich befindet,
ein Gitter in einem Inneren des Schachtreaktors in einem Übergangsbereich zwischen dem mittigen Abschnitt des Schachtreaktors und dem Fußende zur Abstützung der Schüttung angeordnet ist,
das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist, das Luftleitungsrohr mit einem Luftaußenrohr über welches Luft von au-βen zuführbar ist, verbunden ist, die Teilchenfördereinrichtung im Bereich des Kopfendes angeordnet ist, welche eine Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist, die Schütte um eine quer zu der Vertikaldrehachse ausgerichtete Horizontalschwenkachse neigbar ausgebildet ist, die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben, die Zuführung der Luft in die Schüttung durch die Belüftungsdosiereinrichtung luftmengen- und zonenkontrolliert ist, der Abstand eines oberen Endes des Außenrohrs von der Unterseite des Gitters festlegbar und das Außenrohr quer zu einer Mitte-Längsachse des Schachtreaktors verschiebbar sind,
eine von dem Gitter beabstandet angeordnete Auffangeinrichtung unter oder unterhalb der Belüftungsdosiereinrichtung zur Ablöschung der aus der Austragsöffnung des Schachtreaktors bewegten Pflanzenkohle angeordnet ist, die Auffangeinrichtung mit der Zerkleinerungsvorrichtung zum Transport der Pflanzenkohle in die erfindungsgemäße Zerkleinerungsvorrichtung verbunden ist, wobei die erfindungsgemäße Zerkleinerungsvorrichtung zur Veredelung, vorzugsweise Pulverisierung, der Pflanzenkohle der vorgenannten Anlage mit der Auffangeinrichtung der Anlage verbunden ist und mindestens, vorzugsweise zwei, Kugelmühlen umfasst, wobei zum Beispiel
die erste Kugelmühle zur Herstellung von Pflanzenkohleteilchen einen einen Einlass zur Beschickung eines Mahlbehälters (3) der ersten Kugelmühle mit einem ersten Mahlgut, vorzugsweise einer Pflanzenkohle, und den einen Auslass aufweisenden Mahlbehälter mit einem Mahlraum, mindestens ein Antriebsaggregat (9) und eine Trenneinrichtung umfasst,
das Antriebsaggregat an dem Mahlbehälter zum Antreiben desselben gekoppelt ist zur Erzeugung von Bewegungen des Mahlbehälters, der Mahlbehälter einen Boden und eine Mahlbehälterwand aufweist, an dem Boden die Mahlbehälterwand angeformt ist,
die dem Mahlraum zugewandte Innenseite der Mahlbehälterwand im Querschnitt nach außen gewölbt, vorzugsweise teilkreisförmig, wie halbkreisförmig, ausgestaltet ist;
ein Teil des Bodens des Mahlbehälters als Auslass zur Weiterleitung (Abziehen) der Pflanzenkohleteilchen ausgebildet ist, welcher über eine mit dem Auslass verbundene Leitung an einen Einlass einer zweiten Kugelmühle verbunden ist,
dadurch gekennzeichnet, dass
der Auslass ein erstes Sieb als Trenneinrichtung der ersten Kugelmühle zur Trennung der Pflanzenkohleteilchen von Rückständen aufweist,
die Durchbrüche des ersten Siebes der ersten Kugelmühle einander übereinstimmen, in Draufsicht länglich und eckig ausgestaltet und parallel zueinander, vorzugsweise sowie versetz,t zueinander ausgerichtet sind,
der Abstand A der gegenüberliegenden langen die Durchbrüche begrenzenden Durchbruchswände des ersten Siebes voneinander eine lichte Weiten oder einen Abstand von 1,1 bis 6,0 mm, vorzugsweise 1,2 bis 4,0 mm, noch mehr bevorzugt 1,5 mm, beträgt,
eine der Abstand B der gegenüberliegenden kurzen die Durchbrüche begrenzenden Durchbruchswände des ersten Siebes voneinander eine lichte Weiten oder einen Abstand 2,0 bis 5,0 mm, vorzugsweise 2,5 bis 4,0 mm, noch mehr bevorzugt 3,0 oder 3,5 mm, beträgt,
in einem Bereich der dem Einlass der zweiten Kugelmühle zugewandten Außenseite der Trenneinrichtung ein Grobsieb mit einem die Mahlkugeln zurückhaltenden Durchbruch als Durchtrittsöffnung für die Pflanzenkohleteilchen, der kleiner ist als der Durchmesser der Kugeln der ersten Kugelmühle, in der Leitung angeordnet ist,
die zweite Kugelmühle einen Einlass zur Beschickung eines Mahlbehälters mit den Pflanzenkohleteilchen aus der ersten Kugelmühle und einen Auslass aufweisenden Mahlbehälter mit einem Mahlraum, ein Antriebsaggregat und eine Trenneinrichtung umfasst,
das Antriebsaggregat an dem Mahlbehälter gekoppelt ist zur Erzeugung von Bewegungen des Mahlbehälters, der Mahlbehälter einen Boden und eine Mahlbehälterwand aufweist, an dem Boden die Mahlbehälterwand angeformt ist,
die dem Mahlraum zugewandte Innenwand des Mahlbehälterwand im Querschnitt nach außen gewölbt, vorzugsweise teilkreisförmig, wie halbkreisförmig, ausgestaltet ist, ist,
der Auslass ein zweites Sieb als Trenneinrichtung zur Klassierung der behandelten Pflanzenkohleteilchen aufweist,
die Trenneinrichtung der zweiten Kugelmühle als zweites Sieb ein Gitter mit einem metallenen Werkstoff und ein Gitterlage mit Kunststoffen aufweist, welches Gitter auf der dem Mahlbehälter der zweiten Kugelmühle zugewandten Außenseite der Gitterlage aufliegt und in Draufsicht quadratische Durchbrüche aufweist, die Durchbrüche einander übereinstimmen und als Maße C von 0,8 bis 1,3mm x 0,8 bis 1,3 mm, vorzugsweise 1,0 bis 1,2 x 1,0 bis 1,2mm, noch mehr bevorzugt 1,1 x 1,1 mm oder 1,1 x 1,1 mm, aufweisen
   und/ oder
die Mahlbehälter Mahlkugeln enthalten, die Mahlkugeln der ersten Kugelmühle einen geringeren Durchmesser als die Mahlkugeln der zweiten Kugelmühle oder einen mit dem Durchmesser der Mahlkugeln der zweiten Kugelmühle identischen Durchmesser aufweisen.

Ein Gegenstand der Erfindung betrifft auch die Verwendung des Pflanzenkohlepulvers, hergestellt mit der Pflanzenkohlepulverisierungsanlage oder der Zerkleinerungsvorrichtung als Zusatzstoff in Futtermitteln von Nutztieren, wie Wiederkäuern und Schweinen, insbesondere zur Förderung der Verdauung in Wiederkäuern und Schweinen, zum Beispiel zur Unterstützung des Aufschließens des Futtermittels im Verdauungstrakt, in Einzelfuttermittel, in Mischfutter, zur Einmischung in in Nutztiere zu applizierende Flüssigkeiten, z.B. zur Stabilisierung von infolge Krankheit belasteten Verdauungstrakt der Nutztiere.

Ein anderer Gegenstand der Erfindung ist gerichtet auf Pflanzenkohlepulver, herstellbar oder hergestellt mit Pflanzenkohle aus Biomasseteilchen, z.B. mittels der Pflanzenkohlepulverisierungsanlage, die eine Anlage und eine Zerkleinerungsvorrichtung umfasst,
die Pflanzenkohle mit Hilfe der Anlage in einer Schüttung als Wanderbett mit einem Schachtreaktor mit einem ein Kopfende und ein Fußende umfassenden Schachtreaktormantel zur Aufnahme der Pflanzenkohle, mindestens einer Teilchenfördereinrichtung zur Beförderung der Biomasseteilchen in den Schachtreaktor, mindestens einer Belüftungsdosiereinrichtung zur Zuführung der Luft in den Schachtreaktor bereitstellt,
das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, ein Gitter in einem Inneren des Schachtreaktors in einem Übergangsbereich zwischen dem mittigen Abschnitt des Schachtreaktors und dem Fußende zur Abstützung der Schüttung angeordnet ist, das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist,
das Luftleitungsrohr mit einem Luftaußenrohr über welches Luft von außen zuführbar ist,
die Teilchenfördereinrichtung im Bereich des Kopfendes angeordnet ist, welche eine Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist, die Schütte um eine quer zu der Vertikaldrehachse ausgerichtete Horizontalschwenkachse neigbar ausgebildet ist, die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben, die Zuführung der Luft in die Schüttung durch die Belüftungsdosiereinrichtung luftmengen- und zonenkontrolliert ist, der Abstand eines oberen Endes des Außenrohrs von der Unterseite des Gitters festlegbar und das Außenrohr quer zu einer Mitte-Längsachse des Schachtreaktors verschiebbar sind,
eine von dem Gitter beabstandet angeordnete Auffangeinrichtung unter oder unterhalb der Belüftungsdosiereinrichtung zur Ablöschung der aus der Austragsöffnung des Schachtreaktors bewegten Pflanzenkohle angeordnet ist,
die Auffangeinrichtung mit der Zerkleinerungsvorrichtung zum Transport der Pflanzenkohle in die Zerkleinerungsvorrichtung verbunden ist, welche zwei Kugelmühlen umfasst, wobei die erste Kugelmühle einen einen Einlass zur Beschickung eines Mahlbehälters mit einem ersten Mahlgut, vorzugsweise Pflanzenkohle, aus der Anlage mittels einer Transporteinrichtung und den einen Auslass aufweisenden Mahlbehälter mit einem Mahlraum, ein Antriebsaggregat und eine Trenneinrichtung umfasst, das Antriebsaggregat an dem Mahlbehälter zum Antreiben desselben gekoppelt ist zur Erzeugung von, vorzugsweise vibrierenden, Bewegungen des Mahlbehälters, der Mahlbehälter einen Boden und eine Mahlbehälterwand aufweist, an dem Boden die Mahlbehälterwand angeformt ist,
welche dadurch gekennzeichnet ist, dass
die dem Mahlraum zugewandte Innenwand der Mahlbehälterwand im Querschnitt nach außen gewölbt, vorzugsweise teilkreisförmig, ausgestaltet, ist,
ein Teil des Bodens des Mahlbehälters als Auslass zur Weiterleitung der behandelten Pflanzenkohle über eine mit dem Auslass verbundene Leitung an einen Einlass einer zweiten Kugelmühle ausgebildet ist,
der Auslass ein erstes Sieb als Trenneinrichtung zur Trennung der behandelten Pflanzenkohle von Rückständen, wie Fremdstoffen, aufweist,
die zweite Kugelmühle den Einlass zur Beschickung eines Mahlbehälters mit der behandelten Pflanzenkohle aus der ersten Kugelmühle und einen einen Auslass aufweisenden Mahlbehälter mit einem Mahlraum, ein Antriebsaggregat und eine Trenneinrichtung umfasst,
das Antriebsaggregat an dem Mahlbehälter gekoppelt ist zur Erzeugung von, vorzugsweise vibrierenden, Bewegungen des Mahlbehälters,
der Mahlbehälter einen Boden und eine Mahlbehälterwand aufweist,
an dem Boden die Mahlbehälterwand angeformt ist, die dem Mahlraum zugewandte Innenwand des Mahlbehälterwand im Querschnitt nach außen gewölbt, vorzugsweise teilkreisförmig ausgestaltet, ist, der Auslass ein zweites Sieb als Trenneinrichtung zur Klassierung des aus Pflanzenkohleteilchen bereitgestellten Pflanzenkohlepulvers aufweist,
die Mahlbehälter Mahlkugeln enthalten,
die Mahlkugeln der ersten Kugelmühle einen geringeren Durchmesser als die Mahlkugeln der zweiten Kugelmühle aufweisen.

Ein zusätzlicher Gegenstand der Erfindung bezieht sich auf die Verwendung einer mit einer umweltfreundlichen selbstständig regelbaren Anlage zur kontinuierlichen Erzeugung von Pflanzenkohle aus Biomasseteilchen hergestellten Pflanzenkohle in einer Zerkleinerungsvorrichtung zur Pulverisierung derselben, wobei
die umweltfreundliche selbstständig regelbare Anlage eine Schüttung als Wanderbett in einem Schachtreaktor aufweist und umfasst
einen ein Kopfende und ein Fußende umfassenden Schachtreaktormantel zur Aufnahme der Pflanzenkohle,
mindestens einer Teilchenfördereinrichtung zur Beförderung der Biomasseteilchen in den Schachtreaktor,
mindestens einer Belüftungsdosiereinrichtung zur Zuführung der Luft in den Schachtreaktor,
das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet,
ein Gitter in einem Inneren des Schachtreaktors in einem Übergangsbereich zwischen dem mittigen Abschnitt des Schachtreaktors und dem Fußende zur Abstützung der Schüttung angeordnet ist,
das Fußende des Schachtreaktors die Belüftungsdosiereinrichtung aufweist,
die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist,
das Luftleitungsrohr mit einem Luftaußenrohr, über welches Luft von außen zuführbar ist, verbunden ist,
die Teilchenfördereinrichtung im Bereich des Kopfendes angeordnet ist, welche eine Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist,
die Schütte um eine quer zu der Vertikaldrehachse ausgerichtete Horizontalschwenkachse neigbar ausgebildet ist,
die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben,
die Zuführung der Luft in die Schüttung durch die Belüftungsdosiereinrichtung luftmengen- und zonenkontrolliert ist, wobei
der Abstand eines oberen Endes des Außenrohrs von der Unterseite des Gitters festlegbar und das Außenrohr quer zu einer Mitte-Längsachse A des Schachtreaktors verschiebbar sind.

Zudem bezieht sich die Erfindung auf die Verwendung der Zerkleinerungsvorrichtung zur Herstellung von Pflanzenkohlepulver mit einheitlicher Pulverteilchengröße und mit einheitlicher Pulverteilchenform ohne Beeinträchtigung durch Rückstände unterschiedlicher Größe und Form aus Pflanzenkohle. Auch bezieht sich die Erfindung auf die Verwendung der Pflanzenkohlepulverisierungsanlage zur Herstellung von Pflanzenkohlepulver mit einheitlicher Pulverteilchengröße und mit einheitlicher Pulverteilchenform ohne Beeinträchtigung durch Rückstände unterschiedlicher Größe und Form aus Biomasseteilchen.

Die erfindungsgemäße Pflanzenkohle wird veredelt in der erfindungsgemäßen Zerkleinerungsvorrichtung. Unter Veredelung wird im Sinne der Erfindung auch verstanden, ein Pulverisieren, Vermahlen und/oder Zerstoßen der Pflanzenkohle mit der Bereitstellung von Pflanzenkohlepulver aus Pflanzenkohle mit einheitlicher Pulverteilchengröße und einheitlicher Pulverteilchenform ohne Beeinträchtigung durch Rückstände unterschiedlicher Größe und Form, wobei sich das Pflanzenkohlepulver im Gegensatz zum Stand der Technik durch den, insbesondere weitgehend, gleichmäßigen Durchmesser seiner Teilchen und die, insbesondere weitgehend, gleichmäßige Form oder Gestalt seiner Teilchen auch auszeichnet.

Unter Beschickung der Schüttung mit den Biomasseteilchen, wie Pflanzenteilchen, Holzteilchen, oder dergleichen, wird im Sinne der Erfindung auch verstanden das Auffüllen des Schachtreaktors der Anlage in einer vorbestimmten Höhe mit den Biomasseteilchen, wie Pflanzenteilchen, wie Holzteilchen, und /oder das Aufschütten mit Biomasseteilchen auf die Oberflächen vorbestimmter Zonen, z.B. der mittigen Zone oder der Außenzone, der Schüttung, oder von Teilbereichen der mittigen Zone und /oder Außenzone, insbesondere in einer vorbestimmten Höhe.

Unter Holz werden im Sinne der Erfindung auch verstanden sonstige Einsatzmaterialien, wie Holzderivate, Holzabfallprodukte, Holznebenprodukte, stückiges Lignin, Formkörper aus Biomasse. Unter Holzteilchen werden im Sinne der Erfindung auch verstanden stückiges Holz unterschiedlichster Größe und Form, sonstige Einsatzmaterialien, wie Holzderivate, Holzabfallprodukte, Holznebenprodukte, stückiges Lignin, Formkörper aus Biomasse, verstanden.

Unter Klassierung wird im Sinne der Erfindung auch verstanden das Einordnen und/oder Trennen von z.B. Pflanzenkohle nach Größe und/oder Form, so dass auch unverkohlte oder teilverkohle Rückstände oder Biomasseteilchen aufgrund deren Größe und /oder Form getrennt werden können. Unter Klassierung wird im Sinne der Erfindung auch verstanden das Einordnen und/oder Trennen von Pflanzenkohlepulver nach Größe und/oder Form.

Unter Biomasseteilchen werden im Sinne der Erfindung auch verstanden, zerkleinerte zur Verkohlung vorgesehene stückige Biomasse, stückiges Holz unterschiedlichster Größe und Form, sonstige Einsatzmaterialien, wie Holzderivate, Holzabfallprodukte, Holznebenprodukte, stückiges Lignin, Formkörpern aus Biomasse, Stücklinge oder dergleichen verstanden. Im Folgenden kann der Einfachheit halber für verkohlte Biomasseteilchen auch Pflanzenkohleteilchen verwendet werden.

Unter Pflanzenkohle wird im Sinne der Erfindung auch verstanden verkohlte Biomasse, wie verkohlte Biomasseteilchen, z.B. verkohlte pflanzliche Stoffe, beispielsweise verkohltes Holz, verkohlte Stücklinge von Gülle- oder Miststücklingen, oder dergleichen verstanden.

Unter Pflanzenkohleteilchen werden im Sinne der Erfindung auch verstanden zerkleinerte Pflanzenkohle, wie Holzkohle und dergleichen verstanden. Unter Holzkohle wird im Sinne der Erfindung auch verstanden stückige Holzkohle, , usw. Unter Holzkohle und verkohlte Holzteilchen werden im Sinne der Erfindung auch die in Rechtsvorschriften genannten verkohlten holzartigen Stoffe verstanden.

Die erfindungsgemäße Pflanzenkohle wird in einer Zerkleinerungsvorrichtung veredelt, welche zwei Kugelmühlen umfasst. Die erste Kugelmühle in einem dem Böden abgewandten oberen Bereich des Mahlbehälters einen Einlass zur Beschickung eines Mahlraums eines Mahlbehälters mit einem ersten Mahlgut, vorzugsweise Pflanzenkohle.

Unter erstem Mahlgut wird im Sinne der Erfindung auch verstanden, Pflanzenkohle, welche mittels herkömmlicher Verfahren und/oder mittels der umweltfreundlichen selbstständig regelbaren Anlage zur kontinuierlichen Erzeugung von Pflanzenkohle aus Biomasseteilchen hergestellt wird und der ersten Kugelmühle der erfindungsgemäßen Zerkleinerungsvorrichtung zuführbar ist oder zugeführt wird.

Unter zweitem Mahlgut wird im Sinne der Erfindung auch verstanden, Pflanzenkohleteilchen, welche von der ersten Kugelmühle der erfindungsgemäßen Zerkleinerungsvorrichtung aus Pflanzenkohle hergestellt und der zweiten Kugelmühle der erfindungsgemäßen Zerkleinerungsvorrichtung zur Herstellung von Pflanzenkohlepulver zuführbar ist oder zugeführt wird werden.

In einer Ausgestaltung der erfindungsgemäßen leicht handhabbaren Zerkleinerungsvorrichtung weisen die erste und / oder die zweite Kugelmühlen je einen Mahlbehälter auf, der in einem mittleren Bereich der zumindest einen Teil des Innenraums des Mahlbehälters begrenzenden Mahlbehälterwand hohlzylindrisch ausgebildet ist, wobei die hohlzylindrische Mahlbehälterwand in Richtung zu dem Boden des Mahlbehälters hin in einem Längsschnitt sich verjüngt, so dass das Verhältnis des Durchmessers des Innenraums im hohlzylindrischen Bereich zu dem Durchmesser des Bodens 1,2 bis 1,8, vorzugsweise 1,47, betragen kann. An der Außenseite des hohlzylindrischen Bereichs des Mahlbehälters kann mindestens ein Antriebsaggregat mit einem Getriebe gekoppelt sein. An der Außenseite des hohlzylindrischen Bereichs des Mahlbehälters können auch mindestens zwei Antriebsaggregate mit einem Getriebe gekoppelt sein, die benachbart oder gegenüberliegend an der Außenseite gekoppelt sein können. Ebenso können an der Außenseite des hohlzylindrischen Bereichs des Mahlbehälters mindestens zwei Antriebsaggregate mit ihrem Getrieben V-förmig unter Einschluss eines Winkels von 35 bis 45°, vorteilhaferweise 40°, gekoppelt sein.

Der Mahlbehälter mit seinem hohlzylindrischen Bereich kann exzentrisch an der Antriebsachse oder Antriebswelle des Antriebsaggregats, z.B. mittels eines Getriebes, gekoppelt sein kann. Ebenso kann der hohlzylindrische Bereich des Mahlbehälters der ersten und/oder zweiten Kugelmühle mittels eines Exzentergetriebes oder Unwuchtgetriebes an dem Antriebsaggregat oder gekoppelt sein. Der Boden des Mahlbehälters kann auf herkömmlichen Federeinrichtungen, wie Schraubenfedern, ruhen, die auf einer Standplatte angeordnet sind. In einer weiteren Ausgestaltung der erfindungsgemäßen leicht handhabbaren Zerkleinerungsvorrichtung kann die Standplatte exzentrisch an der Antriebsachse oder Antriebswelle des Antriebsaggregats, z.B. mittels eines Getriebes, gekoppelt sein kann.

Die vorgenannt und nachfolgend offenbarten erfindungsgemäßen Ausführungsformen sind bez. der Erfindungen, wie Zerkleinerungsvorrichtung Pflanzenkohlepulverisierungsanlage, bevorzugterweis untereinander austauschbar und/oder miteinander koppelbar.

In einer anderen Ausgestaltung der erfindungsgemäßen leicht handhabbaren Zerkleinerungsvorrichtung umfassen die erste und / oder die zweite Kugelmühlen je ein Gehäuse oder Gestell, eine Trägervorrichtung, die am Gehäuse beweglich, z.B. um eine Drehachse oder Zentrumsachse drehbar, gelagert ist, eine Aufnahmevorrichtung für den Mahlbehälter, mindestens einen Antrieb für die Trägervorrichtung, mindestens einen Antrieb für die Aufnahmevorrichtung; der Mahlbehälter kann exzentrisch an der Antriebsachse oder Antriebswelle des Antriebsaggregats, z.B. mittels eines Getriebes gekoppelt sein kann. Ebenso kann der Mahlbehälter der ersten und/oder zweiten Kugelmühle mittels eines Exzentergetriebes oder Unwuchtgetriebes an dem Antriebsaggregat gekoppelt sein. Z.B. können die Antriebe der Trägervorrichtung und der Aufnahmevorrichtung vorzugsweise gegenläufig, z.B. mittels gekoppelter Riemenantriebe auch durch einen einzigen Gesamtantriebsmotor, erfolgen. Auch können üblicherweise Masseausgleichseinrichtungen mit Ausgleichsmassen an der Aufnahmevorrichtung und/oder Trägerverrichtung angeordnet sein, um Gegenträgheitsmomente für die Mahlbehälter zu bilden. Auch kann an der Trägervorrichtung die Masseausgleichseinrichtung mit der Ausgleichsmasse und einer Verstelleinrichtung zur zumindest radialen Verstellung der Ausgleichsmasse angeordnet sein, um das Gegenträgheitsmoment anzupassen an das jeweilige vom Mahlbehälter und der Füllung abhängige Trägheitsmoment der Mahlbehälter bzw. Kugelmühle zu verändern oder um das Trägheitsmoment zu kompensieren.

Die erste Kugelmühle und /oder die zweite Kugelmühle der erfindungsgemäßen Zerkleinerungsvorrichtung können auch zumindest als Teil einer Fliehkraftkugelmühle ausgebildet sein, wobei die Mahlbehälter exzentrisch zu Drehachsen oder Zentrumsachsen, Wellen oder Antriebsachsen der Antriebsaggregate angeordnet sind, wobei jedoch die Drehung der Mahlbehälter um ihre eigene Achse, Mitte-Längsachse oder Zentrumsachse verhindert wird. Beispielsweise kann ein eingebautes Kettenrad, eine Zahnradübersetzung, ein Zahnriemen, eine Stangenführung, eine Schmidt-Kupplung oder eine ähnliche Vorrichtung eingesetzt werden, welche die Drehung der Mahlbehälter zu verhindern vermag.

Die Antriebsaggregate können über die Aufnahmevorrichtung und/oder die Trägerverrichtung und/oder Getriebe oder unmittelbar in einer dem Fachmann bekannten Weise dergestalt auf die Mahlbehälter einwirken, dass die Mahlkugeln in dem Mahlbehältern sich vertikal, parallel zu der Mitte-Längs-Achse der Mahlbehälter, radial zu den Mitte-Längs-Achsen der Mahlbehälter, um die Mitte-Längsachse der Mahlbehälters und/oder um eine eigene Achse drehend in den Mahlbehältern bewegen können. Die Mahlbehälter haben vorzugsweise eine Öffnung als Einlass, welche in einem oberen Bereich der Mahlbehälter angeordnet sind und dem Boden der Mahlbehälter gegenüber liegen.

Als besonders vorteilhaft erweist sich, wenn das Nutzvolumen des Mahlbehälters der ersten Kugelmühle zu dem Nutzvolumen des Mahlbehälters der zweiten Kugelmühle ein Verhältnis aufweist von 5,0 bis 12,0, vorzugsweise 8,0 bis 10,0, noch mehr bevorzugt 9,17; in einer anderen Ausgestaltung beträgt das Verhältnis des Nutzvolumens des Mahlbehälters der ersten Kugelmühle zu dem Nutzvolumen des Mahlbehälters der zweiten Kugelmühle kann 3,0 bis 7,0, vorzugsweise 2,5 bis 3,2 oder 4,5 bis 6,5, noch mehr bevorzugt 5,42. Die Durchbrüche des ersten Siebes der ersten Kugelmühle können einander übereinstimmen, länglich ausgestaltet sein und lichte Weiten von 1,7 mm x 5,0 mm aufweisen.

Auch als vorteilhaft ist das Verhältnis der Antriebsleistung der Antriebsaggregate der ersten Kugelmühle zu der Antriebsleistung der Antriebsaggregate der zweiten Kugelmühle, welches von 10 bis 40, vorzugsweise 20 bis 30, noch mehr bevorzugt 25, beträgt.

Auch ist wichtig für die Bereitstellung des Pflanzenkohlepulvers, dass die Drehzahl der Antriebsaggregate der Trägervorrichtung und die Drehzahl der Antriebsaggregate der Aufnahmevorrichtung übereinstimmen, vorzugsweise von 1.000 bis 2.000 upm (Umdrehungen pro Minute), vorteilhafterweise 1.200 bis 1.800 upm, bevorzugterweise 1.400 upm. Die Mahlbehälter der erfindungsgemäßen Zerkleinerungsvorrichtung können auch einfacherweise je über einen Auslass, ein Antriebsaggregat und eine Trenneinrichtung verfügen, wobei das Antriebsaggregat an dem Mahlbehälter zum Antreiben desselben gekoppelt ist zur Erzeugung von, vorzugsweise vibrierenden, Bewegungen des Mahlbehälters. Unter vibrierenden Bewegungen des Mahlbehälters wird man im Sinne der Erfindung auch verstehen können, solche, die die Mahlkugeln in dem Mahlbehälter infolge der Antriebsaggregate zu vertikalen Hin- und Rückbewegungen, wie entlang der Mitte-Längsachse desselben, und/oder zu horizontalen Hin- und Rückbewegungen, wie quer zu der Mitte-Längsachse desselben und/oder in Drehrichtung um die Mitte-Längsachse des Mahlbehälters und / oder Drehbewegungen, wie Eigendrehungen, veranlassen können. und/oder solche, die infolge der vorgenannten Bewegungen der Mahlkugeln von diesen erzeugt werden können; mehrere oder alle der vorgenbannten Bewegungen der Mahlkugeln können sich zumindest teilweise überlagern. Auch können die Mahlkugel in Abhängigkeit von der Ansteuerung der Antriebsaggregate zu einer der während des Betriebs sich einstellenden Drehrichtung um die Mitte-Längsachse des Mahlbehälters entgegengesetzten gegensätzliche Drehbewegung veranlasst werden z.B. zwecks Abgang der Rückstände aus dem Mahlraum der ersten Kugelmühle über die Siebeinrichtung.

Der Mahlbehälter hat einen Boden und eine Mahlbehälterwand, wobei an dem Boden die Mahlbehälterwand angeformt ist und bevorzugterweise die dem Mahlraum, auch Innenraum genannt, zugewandte Innenwand oder -seite der Mahlbehälterwand im Querschnitt nach außen gewölbt, vorzugsweise teilkreisförmig, z.B.. halbkreisförmig, ausgestaltet, ist; auch kann der Mahlbehälter hohlzylindrisch ausgebildet sein. Ein Teil des Bodens des Mahlbehälters kann als Auslass zur Weiterleitung der behandelten Pflanzenkohle über eine mit dem Auslass verbundene Leitung, die mit dem Einlass einer zweiten Kugelmühle der erfindungsgemäßen Zerkleinerungsvorrichtung verbunden ist, ausgebildet sein. Der Auslass kann ein Sieb, auch erstes Sieb genannt, als Trenneinrichtung zur Trennung der behandelten, wie zerkleinerten, Pflanzenkohle von Rückständen, wie Fremdstoffe, z.B. Holzteilchen, aufweisen. Unter Behandlung wird auch im Sinne der Erfindung verstanden die Aufarbeitung der Pflanzenkohle und /oder Pflanzenkohleteilchen mittels Zerkleinerfungsvorrichtung.

Bevorzugt ist, wenn die Mahlkugeln der ersten Kugelmühle einen Durchmesser von 1,8 bis 2,8 cm oder 2,0 bis 2,5 cm, vorzugsweise 2,1 bis 2,4 cm, noch mehr bevorzugt 2,0 cm oder 2,1 cm oder 2,3 cm, am bevorzugtesten 1,6 bis 1,8 cm, aufweisen, Auch ist vorteilhaft für die Bereitstellung des Pflanzenkohlepulvers, dass das Verhältnis der Durchmesser der Mahlkugeln der ersten Kugelmühle oder zumindest einem Teil derselben zu dem Durchmesser der zweiten Kugelmühle oder zumindest einem Teil derselben 1,8 bis 2,5 beträgt oder die Durchmesser der Mahlkugeln der ersten Kugelmühle mit dem Durchmesser der zweiten Kugelmühle übereinstimmt.

Unter Nutzvolumen wird im Sinne der Erfindung verstanden das auf den, vorzugsweise äußeren, Bereich des Mahlbehälters der ersten Kugelmühle bezogene Volumen, in welchem, vorzugsweise äußeren, Bereich die Schüttung mit den Mahlkugeln und der Pflanzenkohle sich befindet zur Behandlung, wie Zermahlung, Zerkleinerung, derselben. Das Nutzvolumen des Mahlraums der ersten Kugelmühle kann betragen 200 1 bis 1000 l, vorzugsweise 250 1 bis 800 l oder 300 1 bis 680 1, noch mehr bevorzugt 325 1 bis 623 1. Auch kann in einer besonderen Ausgestaltung des Mahlbehälters der ersten Kugelmühle der Bereich mit dem inneren desselben übereinstimmen, der dem Innenraum des Mahlbehälters gleichkommen oder gleichgesetzt werden kann. Das Nutzvolumen des Mahlraums der ersten Kugelmühle kann auch betragen 400 1 bis 7001, vorzugsweise 500 1 bis 650 l, bevorzugterweise 325 1, 550 1, 600 l oder 650 1, betragen.

Unter Nutzvolumen wird im Sinne der Erfindung auch verstanden das Volumen des, vorzugsweise äußeren, Bereichs bis zum oberen Rand des Mahlbehälters der ersten Kugelmühle, so dass dieser oder der Innenraum desselben mit Mahlkugeln bis zum oberen Rand befüllt ist oder bis zu einem Abstand von dem oberen Rand des äußeren Bereichs des Mahlbehälters der ersten Kugelmühle befüllt ist, der dem Zweifachen bis Fünffachen, vorzugsweise dem Dreifachen bis Vierfachen, wie 1,5fachen oder 2,0fachen oder 2,5fachen oder 3,5fachen oder 4fachen, des Durchmessers der Mahlkugeln der ersten Kugelmühle entsprechen kann.

In einer Ausgestaltung der erfindungsgemäßen Zerkleinerungsvorrichtung stimmen die Poren, auch Durchbrüche genannt, des ersten Siebes der ersten Kugelmühle einander über und/oder sind länglich ausgestaltet. In einer weiteren Ausgestaltung der erfindungsgemäßen Zerkleinerungsvorrichtung weisen die Durchbrüche des ersten Siebes der ersten Kugelmühle In einer besonderen Ausgestaltung der erfindungsgemäßen Zerkleinerungsvorrichtung sind die Durchbrüche des ersten Siebes der ersten Kugelmühle einander übereinstimmen, in Draufsicht länglich und eckig ausgestaltet und parallel zueinander ausgerichtet sind.

Der Abstand A der gegenüberliegenden langen die Durchbrüche begrenzenden Durchbruchswände des ersten Siebes voneinander kann eine lichte Weiten oder einen Abstand von 1,1 bis 6,0 mm, vorzugsweise 1,2 bis 4,5 mm oder 1,2 bis 4,0 mm, noch mehr bevorzugt 1,5 mm, 2,0 mm oder 2,5 mm oder 3,5 mm, betragen; der Abstand B der gegenüberliegenden kurzen die Durchbrüche begrenzenden Durchbruchswände des ersten Siebes voneinander kann eine lichte Weiten oder einen Abstand 2,0 bis 5,0 mm, vorzugsweise 2,5 bis 4,0 mm, noch mehr bevorzugt 2,5 mm oder 3,0 mm oder 3,5 mm, betragen. Die Durchbrüche des ersten Siebens können auch eine lichte Weite bez. der Spaltbreite von 1,0 bis 4,0 mm, 1,5 bis 3,0, noch mehr bevorzugt von 1,5 bis 1,9 mm, oder 1,0 mm oder 1,5 mm oder 1,8 mm auf; die Durchbrüche des ersten Siebes der ersten Kugelmühle können eine lichte Weite bez. der Spaltlänge von 2,0 bis 5,0 mm, 1,5 bis 4,5,mm, noch mehr bevorzugt von 2,5 bis 4,0 mm oder 3,0 mm bis 4,0 mm, oder 3,0 mm oder 4,0 mm, aufweisen.

Die Dauer der Zerkleinerung der Pflanzenkohle zu Pflanzenkohleteilchen in der ersten Kugelmühle kann zwischen 30 min bis 120 min, vorzugsweise 35 min bis 60 min, noch mehr bevorzugt 30 min oder 45 min lang betragen

Die erfindungsgemäße Pflanzenkohlepulverisierungsanlage zur Herstellung und Veredelung, wie Vermahlung, von Pflanzenkohle zu Pflanzenkohlepulver schließt auch verschiedene Schritte, wie die Trennung, die Zerkleinerung und / oder die Vermahlung von Pflanzenkohle, aus einem Vergasungs- oder Pyrolyseprozess, wie er in der Anlage erfolgen kann, zu Pflanzenkohlepulver ein.

Das mit Hilfe der Anlage hergestellte Endprodukt, wie die Pflanzenkohle, nach einem Vergasungs- bzw. Pyrolyseprozess kann eine ungleichförmige Größenstückelung aufweisen und oftmals noch unverkohltes bzw. unzureichend karbonisiertes Eingangsmaterial aus diesem Vergasungs- bzw. Pyrolyseprozesses enthalten. In der weiteren Verarbeitung zur Veredelung der Pflanzenkohle ist es oftmals notwendig eine gleichförmige Größenstückelung zu besitzen und das die Pflanzenkohle weitestgehend von unverkohltem bzw. unzureichend karbonisiertem Materials zu befreien. In dem erfindungsgemäßen Verfahren und in der erfindungsgemäßen Pflanzenkohlepulverisierungsanlage und der erfindungsgemäßen Zerkleinerungsvorrichtung wird dieses in vorteilhafter Weise erreicht.

Die Mahlkugeln der ersten und/oder zweiten Kugelmühle können als Werkstoff aufweisen Achat, mit 99,9 % SiO₂, Siliziumnitrid, mit z.B. 90 % Si₃N₄, Sinterkorund mit z.B. 99,7 % Al₂O₃, oder 85 bis 90 % Al₂O₃, Zirkonoxid, mit 94,8 % ZrO₂, rostfreier Stahl mit z.B. 12,5 bis 14,5 % Cr + 1 % Ni, gehärteter Stahl mit 1,0 bis 1,65 % Cr, oder Hartmetall Wolframkarbid mit 93,2 % WC + 6 % Co, usw.

Die erste Kugelmühle der erfindungsgemäßen Zerkleinerungsvorichtung kann einen einen Einlass zur Beschickung eines Mahlbehälters mit einem ersten Mahlgut, vorzugsweise Pflanzenkohle, und den einen Auslass aufweisenden Mahlbehälter mit einem Mahlraum, ein Antriebsaggregat und eine Trenneinrichtung aufweisen, wobei das Antriebsaggregat an dem Mahlbehälteroder an dem zum Antreiben desselben gekoppelt sein kann zur Erzeugung von, vorzugsweise vibrierenden, Bewegungen des Mahlbehälters und/oder an der Standplatte die Antriebsachse oder Antriebswelle des Antriebsaggregats, z.B. mittels eines Getriebes, gekoppelt sein kann, auf der die Federeinrichtungen, wie Schraubenfedern, sich befinden, auf denen der Boden des Mahlbehälters federnd ruht. Zudem kann der Mahlbehälter einen Boden und eine Mahlbehälterwand aufweisen, an dem Boden die Mahlbehälterwand angeformt ist. Der Mahlbehälter, auch Bearbeitungs- bzw. Schwingbehälter genannt, lagert abgestützt durch einen Ständer z.B. auf den Federeinrichtungen als Federpaket. Der Mahlbehälter, z.B. als ausgeformter kreisförmig umlaufender Trog mit oder Wendel ausgebildet, nimmt die Mahlkugeln als Mahlkörper, beispielhaft Stahlkugeln, und die von der Anlage erzeugte Pflanzenkohle nach dem Vergasungs- bzw. Pyrolyseprozess auf, die mit einer ungleichförmigen Größenstückelung und dem darin oftmals noch unverkohltem bzw. unzureichend carbonisiertem enthaltenen Eingangsmaterial des Vergasungs- bzw. Pyrolyseprozesses vorliegen kann.

In einer Ausgestaltung kann ein an den Mahlbehälter gekoppelter herkömmlicher Unwucht- oder Schwingantrieb als Antriebsaggregat diesen mit der aufgenommen Schüttung mit Mahlkugeln und der Pflanzenkohle in eine, z.B. elliptische oder elliptisch-förmige, Bewegung versetzen. Aufgrund der spröden Eigenschaft der Kohlenstoffstruktur der Pflanzenkohle wird diese durch die Bewegung der Schüttung zerstoßen, zerkleinert und /oder zermahlen. Die zerkleinerte Pflanzenkohle kann dann klassifiziert durch die Trenneinrichtung, auch Austragseinrichtung genannt, aus dem Mahlbehälter geschleust werden.

Ein Teil des Bodens des Mahlbehälters der ersten Kugelmühle ist als Auslass zur Weiterleitung der behandelten Pflanzenkohleteilchen über eine mit dem Auslass verbundene Leitung an einen Einlass einer zweiten Kugelmühle ausgebildet. Der Auslass kann ein erstes Sieb als Trenneinrichtung zur Trennung der behandelten Pflanzenkohleteilchen von unveränderten Rückständen, wie Fremdstoffen, z.B. Holzstücke,, aufweisen. Das erste Sieb eignet sich vorteilhafterweise ebenso zur Klassierung der Pflanzenkohleteilchen, so dass nur Pflanzenkohleteilchen vorbestimmter Größe und /oder Form weitergeleitet werden; die sonstigen Pflanzenkohleteilchen verbleiben zur weiteren Zermahlung in dem Mahlbehälter bis zur Erreichung der vorbestimmten Größe und / oder Form. Die Durchbrüche des ersten Siebes der ersten Kugelmühle können einander übereinstimmen, in Draufsicht länglich und eckig ausgestaltet und /oder parallel zueinander ausgerichtet sein.

Das Verhältnis des Abstandes A der gegenüberliegenden langen die Durchbrüche begrenzenden Durchbruchswände des ersten Siebes zu dem Abstand B der gegenüberliegenden kurzen die Durchbrüche begrenzenden Durchbruchswände des ersten Siebes voneinander beträgt 4 bis 12, vorzugsweise 6 bis 10, bevorzugterweise 8,0 oder 8,34 oder 9,0.

Der Abstand A der gegenüberliegenden langen die Durchbrüche begrenzenden Durchbruchswände des ersten Siebes voneinander **kann** einer lichten **Weiten** ent**sprechen** oder einen Betrag **von** 1,1 bis 10,0 mm, vorzugsweise 2,0 bis 10,0 mm, noch mehr bevorzugt 3,0 bis 8,0 oder 4,5 bis 8,0 oder 2,5 mm oder 3,5 mm oder 4,5 mm oder 6,5 mm oder 8,5 mm, haben; der Abstand B der gegenüberliegenden kurzen die Durchbrüche begrenzenden Durchbruchswände des ersten Siebes voneinander kann einer lichten **Weiten** ent**sprechen** oder einen Betrag **von** 1,5 bis 5,0 mm, vorzugsweise 2,0 bis 4,0 mm oder 2,5 bis 3,5 mm, noch mehr bevorzugt 1,5 mm oder 2,5 mm oder 3,0 mm oder 3,5 mm, aufweisen.

In einem Bereich der dem Einlass der zweiten Kugelmühle zugewandten Außenseite der Trenneinrichtung kann ein Grobsieb mit einem die Mahlkugeln zurückhaltenden Durchbruch als Durchtrittsöffnung für die Pflanzenkohleteilchen, der kleiner ist als der Durchmesser der Kugeln der ersten Kugelmühle, in der Leitung angeordnet sein,

Zusätzlich kann durch ein Wiegesystem oder eine Zeitsteuerung angesteuert die Pflanzenkohle aus der Anlage in den Mahlbehälter der ersten Kugelmühle mittels einer Dosiereinrichtung mit Pflanzenkohle aus der Anlage zugeführt und / oder nachdosiert werden.

Während der Mahlung in der ersten Kugelmühle sammeln sich mehr und mehr unverkohlte Rückstände aus der Pflanzenkohleherstellung an. Das Ansammeln von unverkohlten Rückständen geschieht daher, da deren Struktur nicht oder nur unzureichend karbonisiert ist und dadurch nicht spröde ist, somit nicht von der sich bewegenden Schüttung zerkleinert wird, und nicht über den Auslass mit der Trenneinrichtung zu der zweiten Kugelmühle ausgeschleust werden kann. Um das unverkohlte Rückstände oder Eingangsmaterial aus der Pflanzenkohleherstellung aus dem Mahlbehälter zu schleusen, wird zeit- oder gewichtsgesteuert eine Weiche bzw. Klappe in die Schüttung getaucht. Die Schüttung kann hierdurch auf eine im oder außerhalb des Mahlbehälters angeordnete Siebeinrichtung geleitet werden. Die Siebeinrichtung ist so ausgeführt, dass sich die Schüttung oben auf der Siebeinrichtung geleitet und anschließend zurück in den Mahlbehälter fällt. Die unverkohlten Rückstände aus der Pflanzenkohleherstellung fallen durch die Siebeinrichtung und werden einem Austrag zugeführt und ausgeschleust.

Die mit Hilfe der ersten Kugelmühle der erfindungsgemäßen Zerkleinerungsvorrichtung veredelte, sprich zerkleinerte, Pflanzenkohle zu Pflanzenkohleteilchen weist eine derartige Gestalt und Größe auf, dass diese durch das erste Sieb der Trenneinrichtung der ersten Kugelmühle hindurch, über die mit dem Auslass verbundene Leitung und über den mit der Leitung verbundenen Einlass des Mahlbehälters der zweiten Kugelmühle in diesen transportiert werden. Der Transport kann zum Beispiel mittels Pumpe bereitgestellt werden; ebenso kann die erste Kugelmühle oberhalb der zweite Kugelmühle angeordnet sein, so dass die zu Pflanzenkohleteilchen zerkleinerte Pflanzenkohle aufgrund ihres Eigengewichtes auf einfache Weise in den Mahlraum des Mahlbehälters der zweiten Kugelmühle gelangt.

In einer Ausgestaltung der erfindungsgemäßen Zerkleinerungsvorrichtung weist die zweite Kugelmühle den Einlass zur Beschickung ihres Mahlbehälters mit Pflanzenkohleteilchen als zerkleinerte Pflanzenkohle, als sogenanntes zweites Mahlgut, aus der ersten Kugelmühle und einen einen Auslass aufweisenden Mahlbehälter mit einem Mahlraum, ein Antriebsaggregat und eine Trenneinrichtung auf. Wie die erste Kugelmühle ist das Antriebsaggregat der zweiten Kugelmühle auf herkömmliche Weise an dem Mahlbehälter gekoppelt zur Erzeugung von, vorzugsweise vibrierenden, Bewegungen des Mahlbehälters. Der Mahlbehälter hat einen Boden und eine Mahlbehälterwand, der an dem Boden die Mahlbehälterwand angeformt ist; die dem Mahlraum zugewandte Innenwand, auch Innenseite genannt, des Mahlbehälterwand ist vorzugsweise im Querschnitt nach außen gewölbt, wie teilkreisförmig, z.B.. halbkreisförmig, ausgestaltet.

In einer Ausgestaltung der ersten und/ oder zweiten Kugelmühle der erfindungsgemä-βen leicht handhabbaren Zerkleinerungsvorrichtung weist die zweite Kugelmühlen einen Mahlbehälter auf, der in einem mittleren Bereich der zumindest einen Teil des Innenraums des Mahlbehälters begrenzenden Mahlbehälterwand hohlzylindrisch ausgebildet ist, wobei die hohlzylindrische Mahlbehälterwand in Richtung zu dem Boden des Mahlbehälters hin in einem Längsschnitt sich verjüngt, so dass das Verhältnis des Durchmessers des Innenraums im hohlzylindrischen Bereich zu dem Durchmesser des Bodens 1,2 bis 1,8, vorzugsweise 1,47, betragen kann. An der Außenseite des hohlzylindrischen Bereichs des Mahlbehälters kann mindestens ein Antriebsaggregat mit einem Getriebe gekoppelt sein.

In einer anderen Ausgestaltung der ersten und/ oder zweiten Kugelmühle der erfindungsgemäßen leicht handhabbaren Zerkleinerungsvorrichtung können an der Außenseite des hohlzylindrischen Bereichs des Mahlbehälters auch mindestens ein, vorzugsweise zwei, Antriebsaggregate mit einem Getriebe gekoppelt sein; die Antriebsaggregate können benachbart oder gegenüberliegend an der Außenseite gekoppelt sein. Ebenso können an der Außenseite des hohlzylindrischen Bereichs des Mahlbehälters mindestens zwei Antriebsaggregate mit ihrem Getrieben V-förmig unter Einschluss eines Winkels von 35 bis 45°, vorteilhaferweise 40°, gekoppelt sein.

In einer zusätzlichen Ausgestaltung der ersten und/ oder zweiten Kugelmühle der erfindungsgemäßen leicht handhabbaren Zerkleinerungsvorrichtung kann neben dem an der Außenseite des hohlzylindrischen Bereichs des Mahlbehälters gekoppelten mindestens einem Antriebsaggregat mit einem Getriebe ein weiteres Antriebsaggregat an dem Mahlbehälter zum Antreiben desselben gekoppelt sein kann zur Erzeugung von, vorzugsweise vibrierenden, Bewegungen des Mahlbehälters, wobei an der Standplatte die Antriebsachse oder Antriebswelle dieses Antriebsaggregats, z.B. mittels eines Getriebes, gekoppelt sein kann, auf der die Federeinrichtungen, wie Schraubenfedern, sich befinden, auf denen der Boden des Mahlbehälters federnd ruht. Zudem kann der Mahlbehälter einen Boden und eine Mahlbehälterwand aufweisen, an dem Boden die Mahlbehälterwand angeformt ist.

Der Auslass des Mahlbehälters der zweiten Kugelmühle kann ein zweites Sieb als Trenneinrichtung zur Klassierung der mit Hilfe der zweiten Kugelmühle aus den Pflanzenkohleteilchen zu Pflanzenkohlepulver aufweisen; das zweite Sieb kann ein Gitter mit einem metallenen Werkstoff und eine Gitterlage mit Kunststoffen aufweisen, welches Gitter auf der dem Mahlbehälter der zweiten Kugelmühle zugewandten Außenseite der Gitterlage aufliegt und in Draufsicht, z.B. quadratische, Durchbrüche aufweisen kann; die Durchbrüche können einander übereinstimmen und /oder als Maße C von 0,8 bis 1,3mm x 0,8 bis 1,3 mm, vorzugsweise 1,0 bis 1,2 x 1,0 bis 1,2mm, noch mehr bevorzugt 1,1 x 1,1 mm oder 1,1 x 1,1 mm, aufweisen.

Beispielsweise können die Poren, auch Durchbrüche genannt, des zweiten Siebes der zweiten Kugelmühle einander überein und /oder sind kreisförmig ausgebildet; sie können eine lichte Weite von 0,01 bis 7,0 mm oder weniger als 5 mm, vorzugsweise 0,05 bis 4,0 mm, bevorzugterweise 0,15 bis 3,5 mm, noch mehr bevorzugt 0,2 bis 3,0 mm, oder 0,1 mm oder 0,3 mm oder 0,5 mm oder 1,5 mm oder 2,0 oder 2,5 mm aufweisen. Bevorzugt ist, wenn die Mahlkugeln der zweiten Kugelmühle einen Durchmesser von 0,8 cm bis 2,8 cm oder 1,2 cm bis 2,5 cm, vorzugsweise von 0,8 cm bis 2,0 cm oder von 1,0 cm bis 1,8 cm, noch mehr bevorzugt 1,6 cm bis 1,8 cm, 1,6 cm oder 1,7 cm oder 1,8 cm aufweisen.

Unter Nutzvolumen wird im Sinne der Erfindung verstanden das auf den, vorzugsweise äußeren, Bereich des Mahlbehälters der zweiten Kugelmühle bezogene Volumen, in welchem Bereich die Schüttung mit Mahlkugeln und den Pflanzenkohleteilchen sich befindet zur Pulverisierung derselben. Das Nutzvolumen des Mahlraums der zweiten Kugelmühle kann betragen 100 l bis 500 l, vorzugsweise 150 1 bis 400 1, noch mehr bevorzugt 200 1 bis 350 l oder 250 1 bis 300 l, oder 100 1 oder 250 l oder 300 1. Das Nutzvolumen des Mahlraums der zweiten Kugelmühle kann auch 50 l bis 300 l, vorzugsweise 80 1 bis 250 1, bevorzugterweise 100 1, 150 l, oder 200 l, betragen. Auch kann in einer besonderen Ausgestaltung des Mahlbehälters der zweiten Kugelmühle der Bereich sich mit dem iinneren desselben übereinstimmen, der dem Innenraum des Mahlbehälters gleichkommen oder gleichgesetzt werden kann..

Unter Nutzvolumen wird im Sinne der Erfindung auch verstanden das Volumen des, vorzugsweise äußeren, Bereichs bis zum oberen Rand des Mahlbehälters der zweiten Kugelmühle, so dass dieser oder der Innenraum desselben mit Mahlkugeln bis zum oberen Rand befüllt ist oder bis zu einem Abstand von dem oberen Rand des, vorzugsweise äußeren, Bereichs des Mahlbehälters der zweiten Kugelmühle befüllt ist, der dem Zweifachen bis Fünffachen, vorzugsweise dem Dreifachen bis Vierfachen, wie 1,0fachen oder 1,5fachen oder 2,0fachen oder 3,0fachen oder 3,5fachen oder 4fachen, des Durchmessers der Mahlkugeln der zweiten Kugelmühle entsprechen kann.

Das mit Hilfe der zweiten Kugelmühle aus Pflanzenkohleteilchen hergestellte Pflanzenkohlepulver weist zum Beispiel eine Pulverteilchengrüße von weniger als 5 mm, wie weniger als Imm, z.B. 0,03 mm bis 1,0 mm, vorzugsweise 0,05 mm bis 0,8 mm oder 0,3 bis 0,5 mm oder 0,03 mm oder 0,05 mm oder 0,1 mm oder 0,8 mm oder 0,5 oder 0,3 mm auf. Die Dauer der Zerkleinerung der Pflanzenkohleteilchen zu Pflanzenkohlepulver in der zweiten Kugelmühle kann zwischen 20 min bis 120 min, vorzugsweise 25 min bis 90 min oder 30 min bis 75 min, noch mehr bevorzugt 30 min oder 45 min oder 75 min lang betragen.

Die Mahlbehälter der beiden Kugelmühlen sind vorteilhafterweise in Gestellen beweglich, z.B. exzentrisch zu einer Antriebsachse oder -welle, gelagert sowie an die Antriebsaggregaten auf herkömmliche Weise, z.B. mittels Getriebe, gekoppelt, und können dergestalt angetrieben sein, dass die Mahlkugeln in den Mahlbehältern in Schwingungen versetzt werden können und deren Bewegungen, beispielsweise als Hin- und Rückbewegungen, kreisförmige Bewegungen, usw. sich zu überlagern vermögen.

Vorteile der ersten Kugelmühle der erfindungsgemäßen Zerkleinerungsvorrichtung und der erfindungsmäßen Pulverisierungsanlage
Es zeigt sich, dass sowohl in der ersten Kugelmühle als auch in der zweite Kugelmühle aufgrund der Ausgestaltung der Mahlkugeln der ersten Kugelmühle mit dem o.g. vorteilhaften Durchmesser und die Mahlkugeln der zweiten Kugelmühle mit dem o.g. vorteilhaften Durchmesser eine derartig kinetische Energie von den Mahlkugeln infolge ihrer Dichte in dem Mahlräumen erzeugt wird, dass zum Beispiel in der ersten Kugelmühle zwar die Pflanzenkohle als erstes Mahlgut zu Pflanzenkohleteilchen zerkleinert wird, hingegen aber die mit dem ersten Mahlgut gleichfalls enthaltenden Holzteilchen als Rückstände nicht zerkleinert werden.

Erst die an die Zerkleinerung der Pflanzenkohle als erstes Mahlgut sich anschließende Pulverisierung der Pflanzenkohleteilchen als zweites Mahlgut in der zweiten Kugelmühle unter deren bevorzugten Bedingungen stellt Pflanzenkohlepulver bereit, welches sich überraschenderweise die u.g. Eigenschaften aufweist, die auch zu den Vorteilen, z.B. als Zusatz von Tiernahrung, usw. führen.

Es zeigt sich, dass die Mahlwirkungen in der ersten Kugelmühle, die
von der Wucht des Aufpralls der Mahlkugeln auf die zu behandelnde Pflanzenkohle als erstes Mahlgut,
von der gesamten Kontaktfläche zwischen dem ersten Mahlgut und Mahlkugeln, bzw. zwischen dem ersten Mahlgut und der Innenwand des Mahlbehälters,
von den Relativbewegungen zwischen dem zu zerkleinernden ersten Mahlgut und den Mahlkugeln bzw. der Innenwand des Mahlbehälters und
   und
von dem Druck, der zwischen den miteinander in Kontakt stehenden Oberflächen des ersten Mahlgutes und der Mahlkugeln bzw. der Innenwand des Mahlbehälters erzeugt wird,
zu der Zerkleinerung der Pflanzenkohle zu übereinstimmender oder weitgehend übereinstimmender Größe und Form beiträgt oder bewirkt.

Ebenso unterstützt in der ersten Kugelmühle und der zweiten Kugelmühle die Häufigkeit der Beanspruchung des ersten Mahlgutes durch Kontakte mit den Mahlkugeln bzw. durch Aufprall der Mahlkugeln auf das Mahlgut die Zerkleinerung der Pflanzenkohle zu Pflanzenkohlepulver mit einheitlicher Größe und Form.

Die geschickte Zusammenwirkung dieser verschiedenen vorgenannten physikalischen Parameter wird ebenso vorteilhafterweise erreicht, wenn der Mahlbehälter der ersten Kugelmühle Mahlkugeln mit dem o.g. Durchmesser, das Nutzvolumen des, vorzugsweise äußeren, Bereichs des Mahlraums der ersten Kugelmühle, insbesondere das Verhältnis aus Nutzvolumen und Mahlkugelvolumen, aufweisen. Das Verhältnis des Nutzvolumens des Mahlraums oder des, vorzugsweise äußeren, Bereichs der ersten Kugelmühle zu dem Nutzvolumen des, vorzugsweise äußeren, Bereichs des Mahlraums der zweiten Kugelmühle ist auch erfindungswesentlich und kann 1,6 bis 3,5, vorzugsweise 1,63 bis 1,78, noch mehr bevorzugt 1,67 bis 1,8 oder 2,5 bis 3,2 , betragen.

Durch das Auftreten dieser physikalischen Parameter und deren geschicktes Zusammenwirken miteinander wird erst möglich gemacht, dass das zu behandelnde erste Mahlgut, also die Pflanzenkohle, in der ersten Kugelmühle zwar zerkleinert wird, hingegen aber die unerwünschten Rückstände, wie Holzteile, aufgrund deren im Vergleich zu der Pflanzenkohle größeren Materialhärte unbehandelt während des Betriebs der ersten Kugelmühle verbleiben. Die in der ersten Kugelmühle erzeugte kinetische Energie der Mahlwerkzeuge, hier Mahlkugeln, reicht folglich nicht aus, um auch die Holzteilchen zu brechen, um sie zu zerkleinern. Die trotz Auftreten von Prall- und Scherkräften nicht zerkleinerten Holzteile verbleiben in dem Mahlbehälter der ersten Kugelmühle infolge Trennung mittels der Trenneinrichtung und können getrennt von den Pflanzenkohleteilchen aus dem Mahlbehälter der ersten Kugelmühle abgeleitet werden.

Die Mahlwirkung in der ersten Kugelmühle führt folglich zu einer hinreichenden Zerkleinerung der Pflanzenkohle als zu Pflanzenkohleteilchen mit einer derartigen Größe und Form, die die lichte Weite des ersten Siebes der Trenneinrichtung, die an dem Auslass des Mahlbehälters der ersten Kugelmühle vorhanden ist, passieren können.

Durch das geschickte Zusammenwirken der physikalischen Parameter wirkt eine solche definierte Kraft in den Kugelmühlen und deren Mahlbehältern, dass die Mahlwirkung infolge
der Wucht des Aufpralls der Mahlkugeln
auf das Mahlgut, wie Pflanzenkohle in der ersten Kugelmühle und Pflanzenkohleteilchen in der zweiten Kugelmühle, an der Innenwand oder Innenseite des Mahlbehälters,
auf die Kontaktfläche zwischen dem Mahlgut und den Mahlkugeln,
sowie
auf die Kontaktfläche zwischen dem Mahlgut und der Innenseite des Mahlbehälters einheitlich und wirkungsvoll ist und
die Relativbewegungen zwischen der zu zerkleinernden Pflanzenkohle und Pflanzenkohleteilchen und den Mahlkugeln,
die Relativbewegungen zwischen den zu zerkleinernden Pflanzenkohle und Pflanzenkohleteilchen und der Innenseite des Mahlbechers
der Druck, der zwischen den miteinander in Kontakt stehenden Oberflächen des Mahlgutes einerseits und der Mahlkugeln andererseits sowie
zwischen den in Kontakt stehenden Oberflächen des Mahlgutes und der Innenseite der Mahlkörper einwirkt,
zu einer einheitlichen Größe oder Durchmesser des Pflanzenkohlepulvers und Gestalt führen.

Es zeichnet sich durch dieses geschickte Zusammenwirkung der o.g. physikalischen Parameter aus, dass durch
die Häufigkeit der Beanspruchung des Mahlgutes, also der Pflanzenkohle, durch Kontakt mit den Mahlkugeln und / oder durch den Aufprall der Mahlkugeln auf das Mahlgut in dem Mahlbehälter der ersten Kugelmühle und
die Häufigkeit der Beanspruchung der Pflanzenkohleteilchen durch Kontakt mit den Mahlkugeln und/oder durch den Aufprall der Mahlkugeln auf das Mahlgut in dem Mahlbehälter der zweiten Kugelmühle,
Bereitstellung der Vereinheitlichung des Pflanzenkohlepulvers in Form und Größe unterstützt wird.

Es zeigt sich durch das Zusammenwirken von den definierten Verhältnissen, wie
die Durchmesser der Mahlkugeln der ersten Kugelmühle stimmen mit dem Durchmesser der zweiten Kugelmühle überein,
das Verhältnis des Durchmessers des Innenraums im hohlzylindrischen Bereich zu dem Durchmesser des Bodens beträgt 1,47,
das Verhältnis des Nutzvolumens des Mahlbehälters der ersten Kugelmühle zu dem Nutzvolumen des Mahlbehälters der zweiten Kugelmühle beträgt 5,42,
das Verhältnis der Antriebsleistung der Antriebsaggregate der ersten Kugelmühle zu der Antriebsleistung der Antriebsaggregate der zweiten Kugelmühle beträgt 25,
der Abstand A der gegenüberliegenden langen die Durchbrüche begrenzenden Durchbruchswände des ersten Siebes voneinander beträgt 3,5 mm und/oder
der Abstand B der gegenüberliegenden kurzen die Durchbrüche begrenzenden Durchbruchswände des ersten Siebes voneinander beträgt 3,5 mm oder 4,5 mm
die Drehzahlen der Antriebsaggregate der ersten Kugelmühle und zweiten Kugelmühle stimmen einander überein,
   und
mit den technischen Vorgaben, wie
der Durchmesser der Mahlkugeln der ersten Kugelmühle stimmt mit dem Durchmesser der zweiten Kugelmühle überein,
die Durchbrüche des ersten Siebes der ersten Kugelmühle stimmen einander überein, sind Draufsicht länglich und eckig und parallel zueinander ausgerichtet,
werden Pflanzenkohlepulverteilchen in einer derartigen Gestalt und Durchmesser bereitgestellt, dass sie sich unerwarterweise als Zusatzstoffe in Salben, Lösungen zur Verabreichung bei Tieren und in sonstigen Bereichen der Landwirtschaft besonders eigen.

Erst durch das geschickte Zusammenspiel der technischen Vorgaben der erfindungsgemäßen Zerkleinerungsvorrichtung mit
- Mahlbehälter mit in deren hohlzylindrischen Bereichen angreifenden Antriebsaggregaten,
- dem erstem Sieb der ersten Kugelmühle
- dem Grobsieb,
- dem zweiten Sieb der zweiten Kugelmühle
- den Durchbrüchen des ersten Siebes der ersten Kugelmühle, die einander übereinstimmen, in Draufsicht länglich und eckig ausgestaltet und parallel zueinander und versetzt zueinander ausgerichtet sind,
- dem Gitter mit einem metallenen Werkstoff und ein Gitterlage mit Kunststoffen,
- den Mahlkugeln der ersten Kugelmühle, deren Durchmesser mit dem Durchmesser der Mahlkugeln der zweiten Kugelmühle identisch ist,
werden Pflanzenkohlepulver hergestellt, die biologisch besonders nachhaltig einsetzbar sind.

Erst durch die Bereitstellung des erfindungsgemäßen Pflanzenkohlepulver, welches in Form und Durchmesser einheitlich ist und aufgrund der Verarbeitung oder Behandlung in der erfindungsgemäßen Zerkleinerungsvorrichtung, mit einer definierten Oberfläche der Pflanzenkohlepulver auch ausgestaltet ist, wird ermöglicht dass das erfindungsgemäße Pflanzenkohlepulver sich besonders eignet als Zusatzstoff in Salben; in diesen Salben können das oder die Pflanzenkohlepulver in einer Salbengrundlage und den darin fein verteilten Wirkstof zur Anwendung gebracht werden, z.B. zum Einreiben oder Aufträgen an Haut und/oder Schleimhäuten von Tieren.

Als Grundlage dienen für die Salben neben dem Pflanzenkohlepulver Kohlenwasserstoffgele, z.B. Vaseline, Plastibase, Lipogele, z.B. Bienenwachs, Walrat, Wollwachs, Hydrogele, z.B. Aerosil, Bentonite, Stärkederivate, Polyacrylsäure, Polyethylenglykole, sowie Silicongele. Zusätzlich in den Salben können verarbeitet oder hinzugefügt werden als Zusatzstoffe Vitamine, Elektrolyte, eM (=effektive Microorganismen), wie Milchsäurebakterien, usw., Hefepilze, sowie Proteine, Kohlenhydrate, usw.

Ebenso eignet sich das erfindungsgemäße Pflanzenkohlepulver als Zusatzstoff in Lösungen, die Tieren, wie Wiederkäuer, wie Rindvieh, aber auch Pferden verabreicht werden kann. Die Lösungen können gleichfalls neben dem Pflanzenkohlepulver z.B. in physiologischer Kochsalzlösung mit Zusatzstoffen, wie Vitamine, eM, Elektrolyte, Proteine, Kohlenhydrate, usw., enthalten, die sich als stabilisierend für die Verdauungsvorgänge in Tieren erweisen, gerade bei der zwischenzeitlich sich zeigenden Massentierhaltung.

Auch kann das Pflanzenkohlepulver in Keksen, Zwieback, sonstigen Teigwaren verarbeitet werden, die zusammen mit den vorgenannten weiteren Zusatzstoffen zur Förderung der Verdauung und Stabilisierung derselben Tieren verabreich werden können.

Auch verbleiben die Pflanzenkohleteilchen, welche noch nicht auf eine derartige mittels der Trenneinrichtung vorbestimmte Größe und/oder Form zerkleinert sind, so dass deren Passieren des ersten Siebes der Trennvorrichtung des Mahlbehälters der ersten Kugelmühle nicht möglich ist, derart lange für eine gewisse Zeitdauer in dem Mahlbehälter der ersten Kugelmühle, bis auch deren Zerkleinerung zu der vorgegebenen Größe und /oder Form sich einstellt.

Es zeigt sich, dass die in der ersten Kugelmühle auftretenden Parameter eine kinetische Energie hervorrufen, die zu einer Verformung im Kontaktbereich zwischen dem Mahlkugeln bzw. zwischen den Mahlkugeln und der Innenwand des Mahlbehälters einerseits und den zu zerkleinernden Pflanzenkohlen andererseits erzeugt, die schließlich zum Bruch der Pflanzenkohle zu -teilchen führt. Hierbei zeigt sich, dass für die Zerkleinerung der erforderliche Energieeintrag in das zu zerkleinernde Volumen als mechanische Arbeit vorteilhaft ist, die bis zum Erreichen des Bruchs aufzuwenden ist.

Hinzukommend zeigt sich als Überraschung, dass die Pflanzenkohle einer zweifachen Behandlung, zuerst der ersten Kugelmühle und anschließend der zweiten Kugelmühle, unterworfen werden muss, um sich durch deren Eigenschaften und deren hieraus sich zeigenden Vorteile, z.B. in Bezug auf deren Verwendung oder Verwertung, auszuzeichnen; erst haben die Mahlkugeln der ersten Kugelmühle mit einem vorbestimmten Durchmesser die Pflanzenkohle zu zerkleinern und anschließend nach der Unterbrechung durch Zuführen der Pflanzenkohleteilchen in die zweite Kugelmühle haben die Mahlkugeln der zweiten Kugelmühle mit einem vorbestimmten Durchmesser, ggf. einer vorbestimmten Zeitdauer, die Pflanzenkohleteilchen zu Pflanzenkohlepulver pulverisieren.

Durch die zweite Kugelmühle wird das zu behandelnde zweite Mahlgut, die Pflanzenkohleteilchen, über den Auslass des Mahlbehälters der ersten Kugelmühle und über den Einlass des Mahlbehälters der zweiten Kugelmühle in deren Mahlraum beschickt. In der zweiten Kugelmühle wird gleichfalls eine derartige kinetische Energie erzeugt unter Anderem durch die Mahlkugeln vorbestimmten Durchmessers, Zeitdauer und durch das Nutzvolumen des Mahlraums der zweiten Kugelmühle, ggf. das Verhältnis von Nutzvolumen zu Volumen der Mahlkugeln der zweiten Kugelmühle, dass die in den Mahlraum des Mahlbehälters der zweiten Kugelmühle aus dem Innenraum des Mahlbehälters der ersten Kugelmühle eingeführten Pflanzenkohlenteilchen zu einheitlicher Größe und Form pulverisiert werden.

Die mit der erfindungsgemäßen Zerkleinerungsvorrichtung verbundene Anlage kann Pflanzenkohle aus einer Biomasseteilchen in einer Schüttung als Wanderbett mit einem Schachtreaktor erzeugen; die Anlage umfasst einen ein Kopfende und ein Fußende umfassenden Schachtreaktormantel zur Aufnahme der Pflanzenkohle, mindestens eine Teilchenfördereinrichtung zur Beförderung der Biomasseteilchen in den Schachtreaktor, mindestens eine Belüftungsdosiereinrichtung zur Zuführung der Luft in den Schachtreaktor, wobei das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, ein Gitter in einem Inneren des Schachtreaktors in einem Übergangsbereich zwischen dem mittigen Abschnitt des Schachtreaktors und dem Fußende zur Abstützung der Schüttung angeordnet ist, das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist,
das Luftleitungsrohr mit einem Luftaußenrohr, über welches Luft von außen zuführbar ist, verbunden ist, die Teilchenfördereinrichtung im Bereich des Kopfendes angeordnet ist, welche ein Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist,
die Schütte um eine quer zu der Vertikaldrehachse ausgerichtete Horizontalschwenkachse neigbar ausgebildet ist, die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben, die Zuführung der Luft in die Schüttung durch die Belüftungsdosiereinrichtung luftmengen- und zonenkontrolliert ist, wobei der Abstand eines oberen Endes des Außenrohrs von der Unterseite des Gitters festlegbar und das Außenrohr quer zu einer Mitte-Längsachse A des Schachtreaktors verschiebbar sind.

Eine von dem Gitter beabstandet angeordnete Auffangeinrichtung unter oder unterhalb der Belüftungsdosiereinrichtung ist zur Ablöschung der aus der Austragsöffnung des Schachtreaktors bewegten Pflanzenkohle angeordnet; die Auffangeinrichtung ist mit dem Einlass der Zerkleinerungsvorrichtung zur Beschickung des Mahlbehälters der ersten Kugelmühle der Zerkleinerungsvorrichtung zum Transport der Pflanzenkohle aus der Anlage in die Zerkleinerungsvorrichtung, zum Beispiel mittels eines Transporteinrichtung, wie eines Förderbandes, einer Transportschnecke, einem Becherwerk, einem Elevator oder einem Kratzkettenförderer, verbunden.

Zudem sind zur gleichmäßigen radialen Temperaturführung und Vermeidung von hei-βen Stellen, auch hot spots genannt, in der Schüttung während der Verkohlung die Beschickung der Schüttung mit Biomasseteilchen durch die Teilchenfördereinrichtung mengen-, zonen- und höhenkontrolliert und das Abführen von Prozessgasen durch eine in einer von dem Kopfende abgehenden Prozessgasleitung angeordneten Prozessgaskontrolleinrichtung zur Weiterleitung der Gase druckgaskontrolliert angesteuert. Des Weiteren sind die Belüf: tungsdosiereinrichtung unter dem Gitter und eine Teilchenzähleinrichtung zur Bestimmung der Anzahl und/oder Größe der Pflanzenkohle unterhalb des Gitters angeordnet; zur Temperaturführung in der Schüttung sind das Ausmaß der Neigung der Schütte und der Drehbarkeit der Schütteinrichtung und/oder das Ausmaß der Beschickung der Schüttung mit der Biomasse in Bezug auf deren Menge und Oberflächenverteilung mittels Messeinrichtungen angesteuert. Auch sind das Außenrohr längs zu einer Mitte-Längsachse A des Schachtreaktors und /oder das Luftleitungsrohr quer und /oder längs zu einer Mitte-Längsachse A des Schachtreaktors verschiebbar. Auch kann an die Austragsöffnung eine Nachverkohlungszone auf der in der Austragsöffnung des Schachtreaktors befindlichen Teilchenzähleinrichtung als Messeinrichtung, vorzugsweise eine Zellradschleuse, zur Bestimmung der Dauer der Nachverkohlung, der Anzahl der die Austragsöffnung passierenden Pflanzenkohle und /oder zur Bestimmung der Menge an Ablöschwasser angeordnet sein. An die Nachverkohlungszone kann die Auffangeinrichtung zur Ablöschung der aus der Nachverkohlungszone gelangte Pflanzenkohle angeordnet sein, wobei die Auffangeinrichtung ihrerseits mit dem Einlass der Zerkleinerungsvorrichtung zur Beschickung des Mahlbehälters der ersten Kugelmühle der Zerkleinerungsvorrichtung zum Transport der Pflanzenkohle aus der Anlage in die Zerkleinerungsvorrichtung, zum Beispiel mittels einer Transporteinrichtung, wie eines Förderbandes, einer Transportschnecke, einem Becherwerk, einem Elevator oder einem Kratzkettenförderer, verbunden sein kann.

Die Belüftungsdosiereinrichtung leitet die Luft dem Gitter kontrolliert, z.B. demjenigen vorbestimmten Bereich des Gitters, zu, der unter oder unterhalb eines Bereich der Schüttung mit einer Temperatur sich befinden kann, welche Temperatur nach Maßgabe der o.g. festgestellten Parameter zu verändern ist. Die Belüftungsdosiereinrichtung kann ein, vorzugsweise längs der Mitte-Längsachse A sich erstreckendes, Luftleitungsrohr und ein Außenrohr mit dem Luftaustritt aufweisen, wobei das Außenrohr ein oberes Ende des Luftleitungsrohrs aufnimmt mit dem Luftleitungsrohr beweglich verbunden ist, vorzugsweise ein unteres Ende des Luftleitungsrohr eine weitere Öffnung aufweist, das Luftleitungsrohr mit einem Luftaußenrohr, über welches Luft von außen zugeführt ist, verbunden ist, vorzugsweise die Teilchenfördereinrichtung im Bereich des Kopfendes, vorzugsweise in der, vorzugsweise dicht verschliessbaren, Eintragsöffnung, angeordnet ist, welche eine Schütteinrichtung zur kontrollierten Beschickung der Schüttung mit Biomasseteilchen, wie Holzteilchen, umfasst, z.B. die Schütteinrichtung ein Schüttelgitter zur gleichmäßigen Verteilung der Biomasseteilchen auf der Schüttung, und / oder ein Verteilerblech oder eine Rutsche zur kontrollierten Beschickung der Oberfläche der Schüttung mit Biomasseteilchen aufweist, insbesondere das Verteilerblech um eine Mitte-Längsachse A des Schachtes drehbar gelagert ist, vorzugsweise die Länge und/oder die Neigung des Verteilerblechs veränderbar sind.

Ein Verfahren kann in der Zerkleinerungsvorrichtung die zu pulverisierende Pflanzenkohle herstellen, wobei die Pflanzenkohle mit Hilfe einer umweltfreundlichen selbstständig regelbaren Anlage zur kontinuierlichen Erzeugung von Pflanzenkohle aus Biomasseteilchen in einer Schüttung als Wanderbett in einem im Gegenstrom zur Pflanzenkohle bzw. Biomasseteilchen von Luft durchströmten Schachtreaktor aus Biomasse, vorzugsweise aus Biomasseteilchen, wie Holz, bereitgestellt wird, so dass fortlaufend in der Anlage die Temperaturen in der Schüttung, vorzugsweise zumindest in einer mittigen Zone und/oder in einer Außenzone derselben, der Volumenstrom der aus der Schüttung entweichenden Prozessgase in der mit dem Kopfende des Schachtreaktors verbundenen Prozessgasleitung, die Höhe der Schüttung in dem Schachtreaktor gemessen werden und nach Maßgaben der Temperaturen und / oder des Volumenstroms und/oder der Höhe der Schüttung die Luft über die Belüftungsdosiereinrichtung der Schüttung sowie die Biomasseteilchen über die Teilchenfördereinrichtung der Schüttung zugeführt, die Prozessgase über die Prozessgaskontrolleinrichtung abgezogen werden sowie die Pflanzenkohle aus der Anlage der Zerkleinerungsvorrichtung zugeführt wird.

Vorteile der zweiten Kugelmühle der erfindungsgemäßen Zerkleinerungsvorrichtung und der erfindungsgemäßen Pflanzenkohlepulverisierungsanlage, welche die Anlage und die mit der Anlage verbundenen Zerkleinerungsvorrichtung umfasst:
Durch die Kombination von zwei Kugelmühlen, deren Mahlkugeln unterschiedliche Durchmesser aufweisen und deren Böden Auslässe mit ersten bzw. zweiten Sieben als Trenneinrichtungen zur Trennung der Mahlgüter umfassen, kann auch ein kontinuierlicher Betrieb der erfindungsgemäßen Zerkleinerungsvorrichtung erfolgen, so dass fortlaufend über den Auslass der ersten Kugelmühle die Pflanzenkohleteilchen als zweites Mahlgut nach Zerkleinerung des ersten Mahlgutes in den Mahlraum der zweiten Kugelmühle überführt und von dort nach deren Pulverisierung über den Auslass und dessen zweiten Sieb vorbestimmten Poren- oder Durchbruchsdurchmessers als Trennvorrichtung nach Maßgabe des Durchmessers der Poren des zweiten Siebes nach außen abgeleitet werden können.

Es zeigt sich, dass die erfindungsgemäße Pflanzenkohle, welche der Veredelung der Pflanzenkohle durch die erfindungsgemäßen Zerkleinerungsvorrichtung mittels der beiden hintereinander geschalteten Kugelmühlen unterliegt, als Zusatzstoff den Futtermitteln vorteilhafterweise beigefügt werden kann, sodass die Futtermittel im Verdauungstrakt der Nutztiere den Aufschluss des Futtermittels durch den Verdauungstrakt unterstützen.

Die erfindungsgemäße veredelte Pflanzenkohle als Pflanzenkohlepulver unterstützt nicht nur das Aufschließen des Futtermittels im Verdauungstrakt, sondern erleichtert auch das Freisetzen der Nährstoffe aus dem Futtermittel, wie Proteine, Kohlehydrate, Mineralien, Vitamine, usw., so dass eine weit größere Nachhaltigkeit der Verwertung der Futtermittel in Gegenwart der Pflanzenkohle bereit gestellt wird.

Gerade durch die einheitliche geringe Größe der Pflanzenkohle zu Pflanzenkohlepulver wird eine einheitliche Homogenität an Nutztiere zu verabreichender Pflanzenkohle bereitgestellt wird.

Das erfindungsgemäße Pflanzenkohlepulver zeigt sich auch geeignet bei Verwendung von Futtermitteln jedweder Art, wie Kleie, Schlempe, Treber, Trester, Melasse, Rübenschnitzel usw.

Überdies erweist sich das mit der erfindungsgemäßen Zerkleinerungsvorrichtung und mit dem erfindungsgemäßen Verfahren bereitgestellte erfindungsgemäße Pflanzenkohlepulver zur Eignung
sowohl für Einzelfuttermittel,
als auch für Mischfutter, welches durch Vermischen von Einzelfuttermitteln hergestellt wird.

Darüber hinaus zeichnet sich das mit der erfindungsgemäßen Zerkleinerungsvorrichtung und mit dem erfindungsgemäßen Verfahren bereitgestellte erfindungsgemäße Pflanzenkohlepulver zur Einmischung in in Nutztiere zu applizierende Flüssigkeiten, von Drenschen genannt, aus, um den mit ... Mikroorganismen besiedelten Verdauungstrakt der Nutztiere infolge Krankheit zu stabilisieren, um anschließend die zu erfolgende Futtermittelzugabe vorzubereiten.

Durch die Zugabe von mit der erfindungsgemäßen Zerkleinerungsvorrichtung und mit dem erfindungsgemäßen Verfahren bereitgestelltem erfindungsgemäßem Pflanzenkohlepulver wird die Darreichung von zusätzlichen Vitaminen, Aminosäuren, Mineralien usw. wird auch die Bioverfügbarkeit dieser Stoffe für den Organismus der Nutztiere über deren Verdauungstrakt deutlich erhöht.

### Ausführungsbeispiele

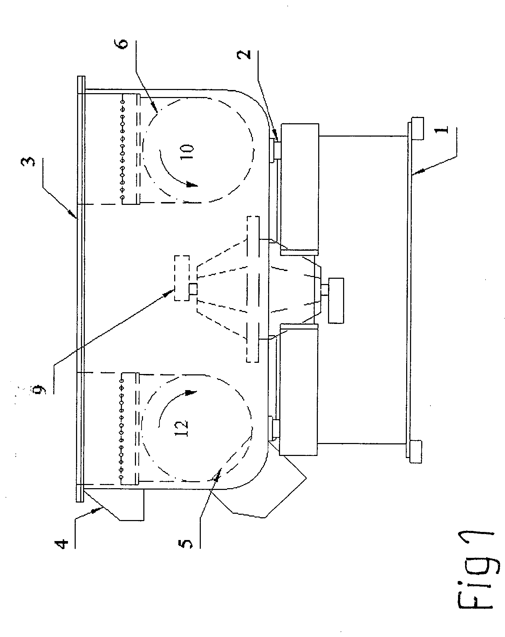

Die Zeichnungen zeigen aufgrund Vereinfachung in schematischer, stark vergrö-βerter Weise, ohne Anspruch auf eine maßstabsgetreue Wiedergabe beispielhaft die erfindungsgemäße Zerkleinerungsvorrichtung, das erfindungsgemäße Verfahren und das erfindungsgemäßem Pflanzenkohlepulver in
Fig. 1 die Seitenansicht auf die erfindungsgemäßem Zerkleinerungsvorrichtung mit einer Kugelmühle
   und

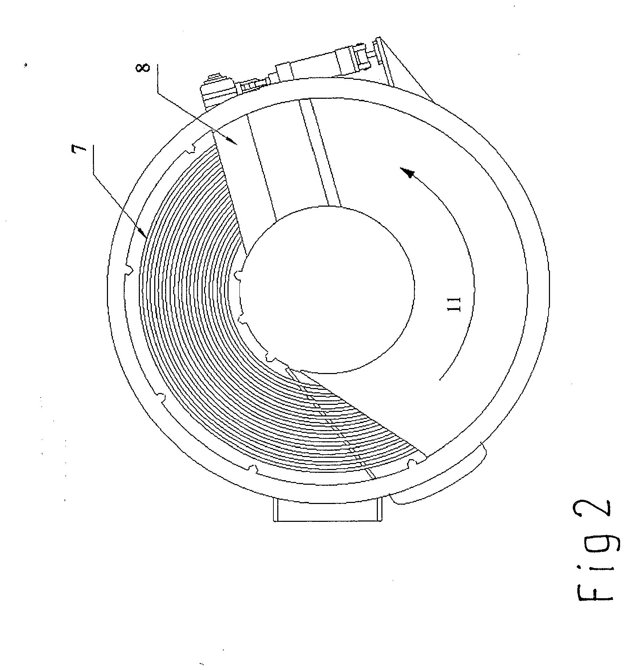

Fig. 2 die Draufsicht auf den Mahlbehälter der, z.B. ersten, Kugelmühle der erfindungsgemäßem Zerkleinerungsvorrichtung.

In einem Ausführungsbeispiel wird die Pflanzenkohle mit Hilfe einer erfindungsgemä-βem Zerkleinerungsvorrichtung hergestellt, die aus zwei Kugelmühlen besteht.

Die erste Kugelmühle umfasst einen den Einlass zur Beschickung eines Mahlbehälters mit einem ersten Mahlgut als Pflanzenkohle und den Auslass aufweisenden Mahlbehälter mit dem Mahlraum, das Antriebsaggregat und die Trenneinrichtung, das Antriebsaggregat ist an dem Mahlbehälter zum Antreiben desselben gekoppelt zur Erzeugung von vibrierenden, Bewegungen des Mahlbehälters. Der Mahlbehälter enthält Mahlkugeln. Im oberen Bereich des Mahlbehälters befindet sich ein Deckel mit dem Einlass, über welchen der Mahlraum mit dem zu behandelnden ersten Mahlgut beschickt wird.

Der Mahlbehälter hat einen Boden und eine Mahlbehälterwand, die an dem Boden die Mahlbehälterwand angeformt ist, wobei die dem Mahlraum zugewandte Innenwand der Mahlbehälterwand im Querschnitt nach außen halbkreisförmig gewölbt ausgestaltet ist. Ein Teil des Bodens des Mahlbehälters hat den Auslass zur Weiterleitung der Pflanzenkohleteilchen als zweites Mahlgut über eine mit dem Auslass verbundene Leitung, die zu dem Einlass der-des Mahlbehälters der zweiten Kugelmühle führt.

Die Mahlkugeln der ersten Kugelmühle haben einen Durchmesser von 1,8 cm oder 2,0 cm. Der Auslass weist ein erstes Sieb 5 als Trenneinrichtung zur Trennung der Pflanzenkohleteilchen als zweites Mahlgut von Rückständen, wie Fremdstoffen, z.B. Holzteilchen, angekohlte Holzteilchen, usw., auf. Die Durchbrüche des ersten Siebes der ersten Kugelmühle stimmen einander überein, sind in der Draufsicht länglich ausgestaltet und haben eine lichte Weiten als Spalt von 1,7 mm x 5,0 mm oder 2,0 mm bis 4,5 mm oder 1,5 mm bis 3,5 mm, vorzugsweise 2,5 mm bis 4,0 mm. Die unverkohlten Rückstände fallen durch eine, ggf. verschließbare, Siebeinrichtung 7 aus dem Mahlbehälter und werden dem Austrag 4 zugeführt und über diesen einer zur Entsorgung zuführbar ausgeschleust.

Die Antriebsaggregate der ersten Kugelmühle wirken derart auf die Mahlkugeln in dem Mahlbehälter der ersten Kugelmühle, dass die Mahlkugeln sich vertikal, parallel zu der Mitte-Längs-Achse des Mahlbehälters, radial zu der Mitte-Längs-Achse oder Zentrumsachse des Mahlbehälters, und/oder um ihre eigene Achse drehend in dem Mahlbehälter sich bewegen können. Der Mahlbehälter hat eine Öffnung, welche im oberen Bereich des Mahlbehälters angeordnet ist und dem Boden des Mahlbehälters gegenüber liegt. Die Drehung des Mahlbehälters wird verhindert.

In einer weiteren Ausgestaltung der erfindungsgemäßen Zerkleinerungsvorrichtung sind die Durchbrüche des ersten Siebes der ersten Kugelmühle einander übereinstimmend, in Draufsicht länglich und eckig ausgestaltet und parallel zueinander ausgerichtet. Der Abstand der gegenüberliegenden langen, die Durchbrüche begrenzenden Durchbruchswände des ersten Siebes **kann** 1,1 bis 5,0 mm, betragen.

Unter oder unterhalb des ersten Siebes der ersten Kugelmühle kann ein Grobsieb angeordnet sein, welches einen Durchbruch aufweist, dessen Durchtrittsöffnung geringer ist als der Durchmesser der Mahlkugeln des Mahlbehälters der ersten Kugelmühle, um einen Durchtritt der Mahlkugeln aus dem Mahlbehälter in die Leitung zu der zweiten Kugelmühle und dessen Einlass zu verhindern. Der Mahlbehälter der zweiten Kugelmühle hat als Trenneinrichtung ein zweites Sieb, welches als Gitter ausgestaltet ist mit einem metallenem Werkstoff, vorzugsweise Stahl, Aluminium oder dergleichen; das Gitter ist gegen eine Gitterlage, welche aus kunststoffartigen Werkstoffen hergestellt ist, angesetzt. Die Gitterlage befindet sich auf der Außenseite des Gitters, welche dem Innenraum des Mahlbehälters der zweiten Kugelmühle abgewandt ist. Das Gitter weist in Draufsicht quadratische Durchbrüche auf, die einander übereinstimmen können . Unter Gitter wird im Sinne der Erfindung auch verstanden, ein Drahtgeflecht mit parallel angeordneten und/oder gekreuzten Metalldrähten. Die Gitterlage mit Kunststoffen mit in Draufsicht runden Durchbrüchen dient der Abstützung des Gitters. Durch die Durchbrüche des Gitters tritt das Pflanzenkohlepulver hindurch und wird in einem Sammelbehälter aufgefangen. Auch durch das Zusammenwirken des ersten Siebes der ersten Kugelmühle und des Gitters als zweites Sieb des Mahlbehälters der zweiten Kugelmühle wird die Ansammlung von Pflanzenkohlepulver mit einheitlicher Größe und Form zusätzlich zu den o.g. Parametern bereitgestellt.

In einem Ausführungsbeispiel hat die zweite Kugelmühle den Einlass zur Beschickung ihres Mahlbehälters mit den Pflanzenkohleteilchen als zweites Mahlgut aus der ersten Kugelmühle und den Auslass aufweisenden Mahlbehälter mit einem Mahlraum, ein Antriebsaggregat und eine Trenneinrichtung; das Antriebsaggregat ist an dem Mahlbehälter gekoppelt zur Erzeugung von vibrierenden Bewegungen des Mahlbehälters. Der Mahlbehälter enthält Mahlkugeln. Die Mahlkugeln der zweiten Kugelmühle haben einen Durchmesser von 1,2 cm oder 1,4 cm. Die zweite Kugelmühle weist einen Einlass, welcher in einem Deckel der den Mahlraum oberseitig verschließt, auf.

Der Mahlbehälter weist einen Boden und eine Mahlbehälterwand auf, an dem Boden ist die Mahlbehälterwand angeformt, wobei die dem Mahlraum zugewandte Innenwand der Mahlbehälterwand im Querschnitt nach außen gewölbt halbkreisförmig ausgestaltet ist. Der Auslass hat ein zweites Sieb als Trenneinrichtung zur Klassierung des Pflanzenkohlepulvers aus den behandelten Pflanzenkohleteilchen. Die Poren des zweiten Siebes der zweiten Kugelmühle stimmen einander überein, sind in Draufsicht kreisförmig ausgebildet und haben eine lichte Weite von weniger als 5,0 mm, z.B. 0,5 mm oder 1,0 oder 2,0 mm. Das zweite Sieb dient zum Passieren des erfindungsgemäßen Pflanzenkohlepulvers vorbestimmter Form und Durchmesser. Durch das Passieren und die vorbestimmte lichte Weite, auch Innendurchmesser genannt, der Poren des zweiten Siebes wird das erfindungsgemäße Pflanzenkohlepulver vorbestimmter Größe und Form über den Auslass abgeleitet nach außen, hingegen verbleiben diejenigen Teile der Pflanzenkohleteilchen, die größer sind, in dem Mahlbehälter der zweiten Kugelmühle zur erneuten oder weiteren Behandlung.

In einem Ausführungsbeispiel der erfindungsgemäßen eicht handhabbare Zerkleinerungsvorrichtung weist erste Kugelmühle zur Herstellung von Pflanzenkohleteilchen einen einen Einlass zur Beschickung eines Mahlbehälters 3 der ersten Kugelmühle mit einem ersten Mahlgut, vorzugsweise einer Pflanzenkohle, und den einen Auslass aufweisenden Mahlbehälter mit einem Mahlraum, mindestens ein Antriebsaggregat 9 und eine Trenneinrichtung auf; ,das Antriebsaggregat ist an dem Mahlbehälter zum Antreiben desselben seitlich an dessen Außenseite im Bereich von dessen hohlzylindrischen Abschnitt gekoppelt ist. Der Mahlbehälter hat einen Boden und eine Mahlbehälterwand, wobei an dem Boden die Mahlbehälterwand angeformt ist.

Die dem Mahlraum zugewandte Innenseite der Mahlbehälterwand im Querschnitt hohlzylindrisch ausgestaltet.- Ein Teil des Bodens des Mahlbehälters ist als Auslass zur Weiterleitung der Pflanzenkohleteilchen ausgebildet, der über eine mit dem Auslass verbundene Leitung mit einen Einlass einer zweiten Kugelmühle verbunden oder gekoppelt ist.

Der Auslass des Mahlraums der ersten Kugelmühle hat ein erstes Sieb 5 als Trenneinrichtung der ersten Kugelmühle zur Trennung der Pflanzenkohleteilchen von Rückständen, dessen Durchbrüche einander übereinstimmen, in Draufsicht länglich und eckig ausgestaltet und parallel zueinander ausgerichtet sind, der Abstand A der gegenüberliegenden langen die Durchbrüche begrenzenden Durchbruchswände des ersten Siebes voneinander beträgt 1,5 mm, der Abstand B der gegenüberliegenden kurzen die Durchbrüche begrenzenden Durchbruchswände des ersten Siebes voneinander beträgt 4,0 oder 4,5 mm oder 7,5 mm. In dem Bereich der dem Einlass der zweiten Kugelmühle zugewandten Außenseite der Trenneinrichtung ist ein Grobsieb mit einem die Mahlkugeln zurückhaltenden Durchbruch als Durchtrittsöffnung für die Pflanzenkohleteilchen in der Leitung zu dem Mahlraum der zweiten Kugelmühle angeordnet, der kleiner ist als der Durchmesser der Kugeln der ersten Kugelmühle.

Die zweite Kugelmühle hat einen mit der die Auslass des Mahlraums der ersten Kugelmühle verbindende Leitung verbundenden Einlass zur Beschickung eines Mahlbehälters mit den Pflanzenkohleteilchen aus der ersten Kugelmühle und einen Auslass aufweisenden Mahlbehälter mit einem Mahlraum, ein Antriebsaggregat und eine Trenneinrichtung, wobei das Antriebsaggregat an der Außenseite der Mahlbehälterwand des Mahlbehälters, die hohlzylindrisch oder die mit ihrer Innenwand oder -seite nach außen hin gewölbt ausgebildet ist, gekoppelt bzw. angreift. Der Mahlbehälter der zweiten Kugelmühle hat einen Boden und eine Mahlbehälterwand, wobei an dem Boden die Mahlbehälterwand angeformt ist, Die dem Mahlraum zugewandte Innenwand des Mahlbehälterwand ist im Querschnitt hohlzylindrisch oder nach außen gewölbt, vorzugsweise teilkreisförmig, wie halbkreisförmig, ausgestaltet.

Der Auslass hat ein zweites Sieb als Trenneinrichtung zur Klassierung der behandelten Pflanzenkohleteilchen, wobei das zweite Sieb ein Gitter mit einem metallenen Werkstoff und ein Gitterlage mit Kunststoffen aufweist, welches Gitter auf der dem Mahlbehälter der zweiten Kugelmühle zugewandten Außenseite der Gitterlage aufliegt und in Draufsicht quadratische Durchbrüche hat, die e einander übereinstimmen und als Maße von 1,2 x 1,2 mm oder 1,1 x 1,1 mm aufweisen.

Mit Hilfe des erfindungsgemäßen Verfahrens wird die mit Hilfe der erfindungsgemäßen umweltfreundlichen selbstständig regelbaren Anlage hergestellte Pflanzenkohle der Zerkleinerungsvorrichtung zugeführt.

Die in der Zerkleinerungsvorrichtung zu pulverisierende Pflanzenkohle wird in einer umweltfreundlichen selbstständig regelbaren Anlage zur kontinuierlichen Erzeugung von Pflanzenkohle aus einer Biomasseteilchen in einer Schüttung als Wanderbett mit einem Schachtreaktor hergestellt. Der Schachtreaktor hat einen ein Kopfende und ein Fußende umfassenden Schachtreaktormantel zur Aufnahme der Pflanzenkohle, mindestens einer Teilchenfördereinrichtung zur Beförderung der Biomasseteilchen in den Schachtreaktor, mindestens einer Belüftungsdosiereinrichtung zur Zuführung der Luft in den Schachtreaktor, das Kopfende des Schachtreaktors eine Eintragsöffnung und das Fußende des Schachtreaktors eine Austragsöffnung aufweisen, ein mittiger Abschnitt zwischen dem Kopfende und dem Fußende sich befindet, ein Gitter in einem Inneren des Schachtreaktors in einem Übergangsbereich zwischen dem mittigen Abschnitt des Schachtreaktors und dem Fußende zur Abstützung der Schüttung angeordnet ist, das Fußende des Schachtreaktors die Belüftungsdosiereinrichtung aufweist, die Belüftungsdosiereinrichtung ein Luftleitungsrohr und ein Außenrohr aufweist, das Außenrohr ein oberes Ende des Luftleitungsrohrs aufnimmt, das Außenrohr mit dem Luftleitungsrohr beweglich verbunden ist, das Luftleitungsrohr mit einem Luftaußenrohr, über welches Luft von außen zuführbar ist, verbunden ist, die Teilchenfördereinrichtung im Bereich des Kopfendes angeordnet ist, welche eine Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist, die Schütte um eine quer zu der Vertikaldrehachse ausgerichtete Horizontalschwenkachse neigbar ausgebildet ist, die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben, die Zuführung der Luft in die Schüttung durch die Belüftungsdosiereinrichtung luftmengen- und zonenkontrolliert ist, wobei der Abstand eines oberen Endes des Außenrohrs von der Unterseite des Gitters festlegbar und das Außenrohr quer zu einer Mitte-Längsachse A des Schachtreaktors verschiebbar sind.

Eine von dem Gitter beabstandet angeordnete Auffangeinrichtung unter oder unterhalb der Belüftungsdosiereinrichtung ist zur Ablöschung der aus der Austragsöffnung des Schachtreaktors bewegten Pflanzenkohle angeordnet; die Auffangeinrichtung ist über eine Transportschnecke mit dem Einlass der Zerkleinerungsvorrichtung zur Beschickung des Mahlbehälters 3 der ersten Kugelmühle der erfindungsgemäßen Zerkleinerungsvorrichtung zum Transport der Pflanzenkohle aus der Anlage in die erfindungsgemäßen Zerkleinerungsvorrichtung verbunden.

Das erfindungsgemäße Verfahren zur Erzeugung von Pflanzenkohle aus Biomasse, insbesondere aus Biomasseteilchen, wie Holz, verwendet die umweltfreundliche selbstständig regelbare Anlage zur kontinuierlichen Erzeugung von Pflanzenkohle aus Biomasse, wobei fortlaufend
die Temperaturen in der Schüttung, vorzugsweise zumindest in einer mittigen Zone und/oder in einer Außenzone derselben,
der Volumenstrom der aus der Schüttung entweichenden Prozessgase in der mit dem Kopfende des Schachtreaktors verbundenen Prozessgasleitung,
die Höhe der Schüttung in dem Schachtreaktor gemessen werden und
nach Maßgaben der Temperaturen und / oder des Volumenstroms und/oder der Höhe der Schüttung
die Luft über die Belüftungsdosiereinrichtung der Schüttung sowie
die Biomasseteilchen über die Teilchenfördereinrichtung der Schüttung zugeführt,
die Prozessgase über die Prozessgaskontrolleinrichtung abgezogen werden.

Die Luft in die Schüttung wird durch die Belüftungsdosiereinrichtung luftmengen-, und zonenkontrolliert, zugeführt, die Biomasseteilchen durch die Teilchenfördereinrichtung werden mengen-, zonen- und höhenkontrolliert der Schüttung zugegeben und die Prozessgase durch eine in einer von dem Kopfende abgehenden Prozessgasleitung angeordneten Prozessgaskontrolleinrichtung zur Weiterleitung der Gase druckgaskontrolliert werden abgeführt. Nach Maßgaben von Temperaturen und / oder Volumenstrom und/oder Höhe der Schüttung werden die Neigbarkeit einer Schütte und/oder die Drehbarkeit der Schütteinrichtung angesteuert. Die Pflanzenkohle wird in einer Kammer an eine Sortierungs- und Zerkleinerungseinrichtung zur weiteren Aufarbeitung weitergeleitet und die Pflanzenkohleteilchen werden der Größe, der Form, dem Feuchtigkeitsgrad und/oder dem Verkohlungsgrad klassiert. Unter Volumenstrom wird im Sinne der Erfindung auch verstanden die Menge an Prozessgas oder Luft, die z.B. pro vorbestimmter Zeitdauer, ab- oder zugeführt werden kann. Unter Luftvolumenstrom wird im Sinne der Erfindung auch verstanden die Menge an Luft, die z.B. pro vorbestimmter Zeitdauer, der Schüttung zugeführt oder abgeführt und/oder infolge Verkohlung in den Schachtreaktor angesaugt werden kann. Unter Prozessgas wird auch im Sinne der Erfindung das Gas verstanden, das, z.B. pro vorbestimmter Zeitdauer, über die Prozessgasleitung abgeführt werden oder der Schüttung entströmen kann.

Bei Betrieb der ersten Kugelmühle und der zweiten Kugelmühle der erfindungsgemäßen Zerkleinerungsvorrichtung werden die Mahlbehälter nicht selbst in Eigendrehung versetzt, vielmehr nimmt der Betrachter außerhalb der Kugelmühle keine Drehung des Mahlbehälters wahr. Der Betrachter kann aber wahrnehmen, dass die Mahlkugeln in diesen in Bewegungen versetzt werden, wie in Hin- und Rückbewegungen entlang einer Geraden und/oder in Drehrichtung innerhalb des Mahlbehälters, die sich zu überlagern vermögen; so können die Geraden, auf denen die Hin- und Rückbewegungen verlaufen, zusätzlich um einen Kreismittelpunkt, der mit dem des Mahlbehälters zusammenfallen kann, sich bewegen, entlang einer Geraden, in Hin- und Rückbewegungen entlang einer Geraden wobei die Geraden

Aufgrund der kompakten Bauweise der erfindungsgemäßen Zerkleinerungsvorrichtung stellt diese keine hohen Anforderungen an die Erfordernisse der Aufstellung der Zerkleinerungsvorrichtung.

Die erste Kugelmühle der erfindungsgemäßen Zerkleinerungsvorichtung weist einen einen Einlass zur Beschickung eines Mahlbehälters mit einem ersten Mahlgut, vorzugsweise Pflanzenkohle, und den einen Auslass aufweisenden Mahlbehälter 3 mit einem Mahlraum, ein Antriebsaggregat 9 und eine Trenneinrichtung auf, das Antriebsaggregat an dem Mahlbehälter zum Antreiben desselben gekoppelt ist zur Erzeugung von, vorzugsweise vibrierenden, Bewegungen des Mahlbehälters 3, der Mahlbehälter 3 einen Boden und eine Mahlbehälterwand aufweist, an dem Boden die Mahlbehälterwand angeformt ist.

Der Mahlbehälter 3, auch Bearbeitungs- bzw. Schwingbehälter genannt, lagert sich abgestützt durch einen Ständer 2 auf einem Federpaket 2. In einem Ausführungsbeispiel versetzt der an den Mahlbehälter 3 gekoppelte Unwucht- oder Schwingantrieb als Antriebsaggregat diesen mit der von ihm aufgenommenen Schüttung mit Stahlkugeln und der Pflanzenkohle, z.B. sich einander überlagernde Bewegungsrichtungen 10, 11, 12, wie elliptische, kreisförmige Bewegungen und/oder geradlinig verlaufende Hin- und Rückbewegungen. Aufgrund der spröden Eigenschaft der Kohlenstoffstruktur der Pflanzenkohle wird diese durch die Bewegung der Schüttung zerstoßen, zerkleinert und /oder zermahlen. Die zerkleinerte Pflanzenkohle kann dann klassifiziert durch die Trenneinrichtung, auch Austragseinrichtung genannt, aus dem Mahlbehälter geschleust werden. Der Mahlbehälter 3, z.B. als ausgeformter kreisförmig umlaufender Trog mit / oder ohne z.B. innenliegender Wendel ausgebildet, nimmt die Mahlkugeln, beispielhaft Stahlkugeln, und die von der Anlage erzeugte Pflanzenkohle nach dem Vergasungs- bzw. Pyrolyseprozess auf, die mit einer ungleichförmigen Grö-βenstückelung und dem darin oftmals noch unverkohltem bzw. unzureichend carbonisiertem enthaltenen Eingangsmaterial des Vergasungs- bzw. Pyrolyseprozesses vorliegen kann.

In einem Ausführungsbeispiel weist der Mahlbehälter 3 weist in seinem inneren Bereich eine schraubenförmig gewundene Anordnung als Wendel oder einen in Draufsicht kreisförmigen, becherförmigen Trog auf; die Schüttung mit den Stahlkugeln und den aufgenommenen Pflanzenkohleteilen befinden sich in dem äußeren Bereich des Mahlbehälters 3, der sich um die Wendel erstreckt oder ebenso als Trog oder teilweise als Trog ausgestaltet sein kann. Der Unwucht- oder Schwingantrieb als Antriebsaggregat 9 ist an dem Mahlbehälter gekoppelt und versetzt diesen mit der aufgenommenen Schüttung mit Stahlkugeln und der Pflanzenkohle in elliptische und/oder kreisförmige Bewegungen (siehe Pfeile), die sich ebenfalls überlagern können. Die aus Pflanzenkohle zerkleinerten Pflanzenkohleteilchen können klassifiziert durch die Trenneinrichtung, auch Austragseinrichtung genannt, die Teil des Bodens des Mahlbehälters sein kann, mittels erstem Sieb bzw. der Siebeinrichtung 7 ausgeschleust werden, da ein Teil des Bodens des Mahlbehälters 3 der ersten Kugelmühle mit dem ersten Sieb zur Ableitung der Pflanzenkohleteilchen vorbestimmter Größe und / oder Form ausgebildet ist.

Um die unverkohlten Rückstände aus der Pflanzenkohleherstellung aus dem Mahlbehälter zu schleusen wird zeit- und/ oder gewichtsgesteuert eine Weiche bzw. Klappe 8 in die Schüttung 6 getaucht. Die Schüttung 6 wird hierdurch in Richtung auf eine Siebeinrichtung 7 hin geleitet. Die Siebeinrichtung 7 ist so ausgeführt, dass sich die Schüttung oben auf die Siebeinrichtung 7 z.B. mittels Drehrichtungsumkehr der Mahlkugeln bewegt und anschließend zurück in den Mahlbehälter als Bearbeitungs- oder Schwingbehälter in dessen äußeren Bereich fällt. Die unverkohlten Rückstände fallen durch die Siebeinrichtung 7 und werden dem Austrag 4 zugeführt und über diesen einer zur Entsorgung zuführbar ausgeschleust.

### Bezugszeichenliste

- 1: Ständer
- 2:: Federanordnung, -paket
- 3: Mahlbehälter als Bearbeitungs- oder Schwingbehälter
- 4: Austrag für unverkohlte Rückstände aus der Pflanzenkohleherstellung aus erster Kugelmühle
- 5: Sieb, sog. erstes Sieb, als Trenneinrichtung zur Trennung der Pflanzenkohleteilchen
von Rückständen und Weiterleitung der Pflanzenkohleteilchen zur zweiten Kugelmühle
- 6: äußerer Bereich des Mahlbehälters gefüllt mit einer Schüttung aus Pflanzenkohle der Pflanzenkohleherstellung und den Mahlkugeln als Zerkleinerungs- bzw. Mahlmedium
- 7: Siebeinrichtung zur Abführen der Rückstände aus Mahlbehälter
- 8: Weiche oder Klappe zum Umleiten der Schüttung über die Siebeinrichtung
- 9: Antriebsaggregat als Unwucht- oder Schwingantrieb für Mahlbehälter
- 10, 11, 12: Bewegungsrichtungen der Schüttung im Mahlbehälter

## Patentansprüche

1. Leicht handhabbare Zerkleinerungsvorrichtung zur Veredelung, vorzugsweise Pulverisierung, einer Pflanzenkohle,
a. welche mindestens, vorzugsweise zwei, Kugelmühlen umfasst, wobei
b. die erste Kugelmühle zur Herstellung von Pflanzenkohleteilchen einen einen Einlass zur Beschickung eines Mahlbehälters (3) der ersten Kugelmühle mit einem ersten Mahlgut, vorzugsweise einer Pflanzenkohle, und den einen Auslass aufweisenden Mahlbehälter mit einem Mahlraum, mindestens ein Antriebsaggregat (9) und eine Trenneinrichtung umfasst,
c. das Antriebsaggregat an dem Mahlbehälter zum Antreiben desselben gekoppelt ist zur Erzeugung von Bewegungen des Mahlbehälters, der Mahlbehälter einen Boden und eine Mahlbehälterwand aufweist, an dem Boden die Mahlbehälterwand angeformt ist,
d. zumindest ein Teil der dem Mahlraum zugewandten Innenseite der Mahlbehälterwand ist hohlzylindrisch ausgestaltet,
e. ein Teil des Bodens des Mahlbehälters als Auslass zur Weiterleitung der Pflanzenkohleteilchen ausgebildet ist,
f. der Auslass ein erstes Sieb (5) als Trenneinrichtung der ersten Kugelmühle zur Trennung der Pflanzenkohleteilchen von Rückständen aufweist,
**dadurch gekennzeichnet, dass**
g. welcher Auslass über eine mit dem Auslass verbundene Leitung an einen Einlass einer zweiten Kugelmühle verbunden ist,
h. die Durchbrüche des ersten Siebes der ersten Kugelmühle einander übereinstimmen, in Draufsicht länglich und eckig ausgestaltet und parallel zueinander ausgerichtet sind,
i. der Abstand A der gegenüberliegenden langen die Durchbrüche begrenzenden Durchbruchswände des ersten Siebes voneinander einer lichten Weite oder einem Abstand von 1,1 bis 6,0 mm, vorzugsweise 1,2 bis 4,0 mm, noch mehr bevorzugt 1,5 mm, entspricht,
j. der Abstand B der gegenüberliegenden kurzen die Durchbrüche begrenzenden Durchbruchswände des ersten Siebes voneinander einer lichten Weiten oder einem Abstand 2,0 bis 5,0 mm, vorzugsweise 2,5 bis 4,0 mm, noch mehr bevorzugt 3,0 oder 3,5 mm, entspricht,
k. die zweite Kugelmühle einen Einlass zur Beschickung eines Mahlbehälters mit den Pflanzenkohleteilchen aus der ersten Kugelmühle und einen Auslass aufweisenden Mahlbehälter mit einem Mahlraum, ein Antriebsaggregat und eine Trenneinrichtung umfasst,
l. das Antriebsaggregat an dem Mahlbehälter gekoppelt ist zur Erzeugung von Bewegungen des Mahlbehälters, der Mahlbehälter einen Boden und eine Mahlbehälterwand aufweist, an dem Boden die Mahlbehälterwand angeformt ist,
m. die dem Mahlraum zugewandte Innenwand des Mahlbehälterwand im Querschnitt nach außen gewölbt, vorzugsweise teilkreisförmig, wie halbkreisförmig, ausgestaltet ist, ist,
n. der Auslass ein zweites Sieb als Trenneinrichtung zur Klassierung der behandelten Pflanzenkohleteilchen aufweist,
o. die Trenneinrichtung der zweiten Kugelmühle als zweites Sieb ein Gitter mit einem metallenen Werkstoff und ein Gitterlage mit Kunststoffen aufweist,
p. welches Gitter auf der dem Mahlbehälter der zweiten Kugelmühle zugewandten Außenseite der Gitterlage aufliegt und in Draufsicht quadratische Durchbrüche aufweist,
q. die Durchbrüche einander übereinstimmen und als Maße C von 0,8 bis 1,3mm x 0,8 bis 1,3 mm, vorzugsweise 1,0 bis 1,2 x 1,0 bis 1,2mm, noch mehr bevorzugt 1,1 x 1,1 mm oder 1,1 x 1,1 mm, aufweisen,
r. die Mahlbehälter Mahlkugeln enthalten,
die Mahlkugeln der ersten Kugelmühle einen mit dem Durchmesser der Mahlkugeln der zweiten Kugelmühle identischen Durchmesser oder unterschiedlichen Durchmesser aufweisen, vorzugsweise die Mahlkugeln der ersten Kugelmühle einen geringeren Durchmesser als die Mahlkugeln der zweiten Kugelmühle aufweisen.

2. Leicht handhabbare Zerkleinerungsvorrichtung zur Veredelung, vorzugsweise Pulverisierung, einer Pflanzenkohle, nach Anspruch 1, **dadurch gekennzeichnet, dass** die Mahlkugeln der ersten Kugelmühle einen Durchmesser von 1,8 bis 2,8 cm oder 2,0 bis 2,5 cm, vorzugsweise 2,1 bis 2,4 cm, noch mehr bevorzugt 1,8 cm oder 2,0 cm oder 2,1 cm oder 2,3 cm, am bevorzugtesten 1,6 bis 1,8 cm, aufweisen.

3. Leicht handhabbare Zerkleinerungsvorrichtung zur Veredelung, vorzugsweise Pulverisierung, einer Pflanzenkohle, nach Anspruch 1, **dadurch gekennzeichnet, dass** die Mahlkugeln der zweiten Kugelmühle einen Durchmesser von 0,8 cm bis 2,8 cm oder 1,2 cm bis 2,5 cm, vorzugsweise von 0,8 cm bis 2,0 cm oder von 1,0 cm bis 1,8 cm, noch mehr bevorzugt 1,6 cm bis 1,8 cm, 1,2 cm oder 1,4 cm oder 1,6 cm oder 1,7 cm oder 1,8 cm, aufweisen.

4. Leicht handhabbare Zerkleinerungsvorrichtung zur Veredelung, vorzugsweise Pulverisierung, einer Pflanzenkohle, nach Anspruch 1, 2 oder 3, **dadurch gekennzeichnet, dass** die Durchmesser der Mahlkugeln der ersten Kugelmühle mit dem Durchmesser der zweiten Kugelmühle übereinstimmen, das Verhältnis des Durchmessers des Innenraums im hohlzylindrischen Bereich zu dem Durchmesser des Bodens 1,47 beträgt, das Verhältnis des Nutzvolumens des Mahlbehälters der ersten Kugelmühle zu dem Nutzvolumen des Mahlbehälters der zweiten Kugelmühle 5,42 beträgt, das Verhältnis der Antriebsleistung der Antriebsaggregate der ersten Kugelmühle zu der Antriebsleistung der Antriebsaggregate der zweiten Kugelmühle 25 beträgt, der Abstand A der gegenüberliegenden langen die Durchbrüche begrenzenden Durchbruchswände des ersten Siebes voneinander 6,5 oder 7,5 mm beträgt, der Abstand B der gegenüberliegenden kurzen die Durchbrüche begrenzenden Durchbruchswände des ersten Siebes voneinander 1,5 mm oder 2,5 mm beträgt.

5. Leicht handhabbare Zerkleinerungsvorrichtung zur Veredelung, vorzugsweise Pulverisierung, einer Pflanzenkohle, nach einem der Ansprüche 1 bis 4. **dadurch gekennzeichnet, dass** die Poren des Siebes der zweiten Kugelmühle einander übereinstimmen, kreisförmig ausgebildet sind und eine lichte Weite von weniger als 5 mm, vorzugsweise 0,1 mm bis 2,5 mm, noch mehr bevorzugt 0,1 bis 1,0 mm, aufweisen.

6. Leicht handhabbare Zerkleinerungsvorrichtung zur Veredelung, vorzugsweise Pulverisierung, einer Pflanzenkohle, nach einem der Ansprüche 1 bis 5, **dadurch gekennzeichnet, dass** der Boden des Mahlbehälters der ersten und / oder zweiten Kugelmühle auf Schraubenfedern ruhen, die auf einer Standplatte angeordnet sind, an welcher exzentrisch die Antriebsachse oder Antriebswelle des Antriebsaggregats, z.B. mittels eines Getriebes, gekoppelt ist.

7. Pflanzenkohlepulverisierungsanlage zur Herstellung und Veredelung, wie Pulverisierung, von Pflanzenkohle zu Pflanzenkohlepulver mit einer leicht handhabbaren Zerkleinerungsvorrichtung zur Veredelung, vorzugsweise Pulverisierung, einer Pflanzenkohle, nach einem der vorhergehenden Ansprüche, wobei die in der Zerkleinerungsvorrichtung zu pulverisierende Pflanzenkohle zur Beschickung der ersten Kugelmühle mit Hilfe einer Anlage zur kontinuierlichen Erzeugung von Pflanzenkohle aus einer Biomasseteilchen in einer Schüttung als Wanderbett mit einem Schachtreaktor zuvor hergestellt ist, wobei
der Schachtreaktor einen ein Kopfende und ein Fußende umfassenden Schachtreaktormantel zur Aufnahme der Pflanzenkohle,
mindestens einer Teilchenfördereinrichtung zur Beförderung der Biomasseteilchen in den Schachtreaktor,
mindestens einer Belüftungsdosiereinrichtung zur Zuführung der Luft in den Schachtreaktor umfasst,
das Kopfende des Schachtreaktors eine Eintragsöffnung und das Fußende des Schachtreaktors eine Austragsöffnung aufweisen,
ein mittiger Abschnitt zwischen dem Kopfende und dem Fußende sich befindet,
ein Gitter in einem Inneren des Schachtreaktors in einem Übergangsbereich zwischen dem mittigen Abschnitt des Schachtreaktors und dem Fußende zur Abstützung der Schüttung angeordnet ist,
das Fußende des Schachtreaktors die Belüftungsdosiereinrichtung aufweist,
die Belüftungsdosiereinrichtung ein Luftleitungsrohr und ein Außenrohr aufweist,
das Außenrohr ein oberes Ende des Luftleitungsrohrs aufnimmt, das Außenrohr mit dem Luftleitungsrohr beweglich verbunden ist,
das Luftleitungsrohr mit einem Luftaußenrohr, über welches Luft von außen zuführbar ist, verbunden ist,
die Teilchenfördereinrichtung im Bereich des Kopfendes angeordnet ist, welche eine Schütteinrichtung umfasst, die Schütteinrichtung eine stufenlos neigbare Schütte zur gleichmäßigen, kontrollierten, stufenlos radialen Verteilung und Beschickung der Schüttung mit Biomasseteilchen aufweist,
die Schütte um eine quer zu der Vertikaldrehachse ausgerichtete Horizontalschwenkachse neigbar ausgebildet ist,
die eine Hauptantriebseinrichtung aufweisende Schütteinrichtung von der Antriebseinrichtung um die Vertikaldrehachse drehbar angetrieben ist zur Beschickung der Oberfläche der Schüttung im Bereich um die Vertikaldrehachse derselben,
die Zuführung der Luft in die Schüttung durch die Belüftungsdosiereinrichtung luftmengen- und zonenkontrolliert ist,
der Abstand eines oberen Endes des Außenrohrs von der Unterseite des Gitters festlegbar und das Außenrohr quer zu einer Mitte-Längsachse A des Schachtreaktors verschiebbar sind,
eine von dem Gitter beabstandet angeordnete Auffangeinrichtung unter oder unterhalb der Belüftungsdosiereinrichtung zur Ablöschung der aus der Austragsöffnung des Schachtreaktors bewegten Pflanzenkohle angeordnet ist,
die Auffangeinrichtung mit dem Einlass der Zerkleinerungsvorrichtung zur Beschickung des Mahlbehälters (3) der ersten Kugelmühle der Zerkleinerungsvorrichtung zum Transport der Pflanzenkohle aus der Anlage in die Zerkleinerungsvorrichtung über eine Transporteinrichtung verbunden ist.

## Claims

1. Easy-to-handle comminution device for refinement, preferably pulverisation, of a biochar,
a. which comprises at least, preferably two, ball mills, wherein
b. the first ball mill comprises, for producing biochar particles, an inlet for feeding a grinding container (3) of the first ball mill with a first material to be ground, preferably a biochar, and the grinding container comprising an outlet, having a grinding chamber, at least one drive assembly (9) and a separating device,
c. the drive assembly is coupled to the grinding container, for driving said container, for generating movements of the grinding container, the grinding container comprises a base and a grinding container wall, the grinding container wall is moulded onto the base,
d. at least part of the inside of the grinding container wall facing the grinding chamber is configured to be hollow-cylindrical,
e. part of the base of the grinding container is configured as an outlet for conducting the biochar particles onwards,
f. the outlet comprises a first sieve (5) as the separating device of the first ball mill for separating the biochar particles from residues,
**characterised in that**
g. said outlet is connected to an inlet of a second ball mill via a line connected to the outlet,
h. the apertures of the first sieve of the first ball mill correspond to one another, are configured to be elongate and angular in plan view, and are oriented in parallel with one another,
i. the spacing A of the opposing long aperture walls of the first sieve, defining the apertures, from one another corresponds to a clear width or a spacing of 1.1 to 6.0 mm, preferably 1.2 to 4.0 mm, even more preferably 1.5 mm,
j. the spacing B of the opposing short aperture walls of the first sieve, defining the apertures, from one another corresponds to a clear width or a spacing of 2.0 to 5.0 mm, preferably 2.5 to 4.0 mm, even more preferably 3.0 or 3.5 mm,
k. the second ball mill comprises an inlet for feeding a grinding container with the biochar particles from the first ball mill, and a grinding container comprising an outlet, having a grinding chamber, a drive assembly and a separating device,
l. the drive assembly is coupled to the grinding container for generating movements of the grinding container, the grinding container comprises a base and a grinding container wall, the grinding container wall is moulded onto the base,
m. the inner wall of the grinding container wall facing the grinding chamber is curved outwards in cross-section, preferably is configured to be partially circular, for example semicircular,
n. the outlet comprises a second sieve as the separating device for classifying the treated biochar particles,
o. the separating device of the second ball mill, as the second sieve, comprises a lattice comprising a metal material and a lattice layer comprising plastics materials,
p. said lattice lying on the outside of the lattice layer facing the grinding container of the second ball mill, and comprises square apertures in plan view,
q. the apertures correspond to one another and have, as a dimension C, a dimension of 0.8 to 1.3 mm x 0.8 to 1.3 mm, preferably 1.0 to 1.2 x 1.0 to 1.2 mm, even more preferably 1.1 x 1.1 mm or 1.1 x 1.1 mm,
r. the grinding containers contain grinding balls,
the grinding balls of the first ball mill have a diameter identical to the diameter of the grinding balls of the second ball mill or different diameters, preferably the grinding balls of the first ball mill have a smaller diameter than the grinding balls of the second ball mill.

2. Easy-to-handle comminution device for refinement, preferably pulverisation, of a biochar, according to claim 1, **characterised in that** the grinding balls of the first ball mill have a diameter of 1.8 to 2.8 cm or 2.0 to 2.5 cm, preferably 2.1 to 2.4 cm, even more preferably 1.8 cm or 2.0 cm or 2.1 cm or 2.3 cm, most preferably 1.6 to 1.8 cm.

3. Easy-to-handle comminution device for refinement, preferably pulverisation, of a biochar, according to claim 1, **characterised in that** the grinding balls of the second ball mill have a diameter of 0.8 cm to 2.8 cm to 1.2 cm to 2.5 cm, preferably 0.8 cm to 2.0 cm or 1.0 cm to 1.8 cm, even more preferably 1.6 cm to 1.8 cm, 1.2 cm or 1.4 cm or 1.6 cm or 1.7 cm or 1.8 cm.

4. Easy-to-handle comminution device for refinement, preferably pulverisation, of a biochar, according to claim 1, 2 or 3, **characterised in that** the diameters of the grinding balls of the first ball mill correspond to the diameter of the second ball mill, the ratio of the diameter of the interior in the hollow-cylindrical region to the diameter of the base is 1.47, the ratio of the usable volume of the grinding container of the first ball mill to the usable volume of the grinding container of the second ball mill is 5.42, the ratio of the drive power of the drive assembly of the first ball mill to the drive power of the drive assembly of the second ball mill is 25, the spacing A of the opposing long aperture walls, defining the apertures, of the first sieve from one another is 6.5 or 7.5 mm, the spacing B of the opposing short aperture walls, defining the apertures, of the first sieve from one another is 1.5 mm or 2.5 mm.

5. Easy-to-handle comminution device for refinement, preferably pulverisation, of a biochar, according to any of claims 1 to 4, **characterised in that** the pores of the sieve of the second ball mill correspond to one another, are configured to be circular, and have a clear width of less than 5 mm, preferably 0.1 mm to 2.5 mm, even more preferably 0.1 to 1.0 mm.

6. Easy-to-handle comminution device for refinement, preferably pulverisation, of a biochar, according to any of claims 1 to 5, **characterised in that** the base of the grinding container of the first and/or second ball mill rests on helical springs which are arranged on a base plate to which the drive axle or drive shaft of the drive assembly is coupled eccentrically, e.g. by means of a transmission.

7. Biochar pulverisation facility for the production and refinement, for example pulverisation, of biochar to biochar powder comprising an easy-to-handle comminution device for the refinement, preferably pulverisation, of a biochar according to any of the preceding claims, wherein the biochar to be pulverised in the comminution device is previously produced, for feeding to the first ball mill, with the aid of a facility for the continuous generation of biochar from biomass particles in a fill material as a moving bed, with a shaft reactor, wherein
the shaft reactor comprises a shaft reactor casing having a head end and a foot end and intended for receiving the biochar,
at least one particle conveying means for conveying the biomass particles into the shaft reactor,
at least one ventilation metering means for supplying the air into the shaft reactor,
the head end of the shaft reactor comprises an input opening, and the foot end of the shaft reactor comprises an output opening,
a central portion is located between the head end and the foot end,
a lattice is arranged in an interior of the shaft reactor, in a transition region between the central portion of the shaft reactor and the foot end, for supporting the fill material,
the foot end of the shaft reactor comprises the ventilation metering means, the ventilation metering means comprises an air conduction pipe and an outer pipe,
the outer pipe receives an upper end of the air conduction pipe, the outer pipe is movably connected to the air conduction pipe,
the air conduction pipe is connected to an air outer pipe, via which air can be supplied from the outside,
the particle conveying means is arranged in the region of the head end, which comprises a chute means, the chute means comprises a steplessly tiltable chute for uniform, controlled, stepless radial distribution and feeding of the fill material with biomass particles,
the chute is configured to be tiltable about a horizontal pivot axis oriented transversely to the vertical axis of rotation,
the cute means, comprising a main drive means, is rotatably driven by the drive means, about the vertical axis of rotation, for feeding the surface of the fill material in the region about the vertical axis of rotation thereof,
the supply of the air into the fill material via the ventilation metering means is controlled in terms of air quantity and zones,
the spacing of an upper end of the outer tube from the underside of the lattice can be specified, and the outer tube is displaceable transversely to a central longitudinal axis A of the shaft reactor,
a collection means arranged spaced apart from the lattice is arranged under or below the ventilation metering means, for damping the biochar moved out of the output opening of the shaft reactor,
the collection means is connected to the inlet of the comminution device for feeding the grinding container (3) of the first ball mill of the comminution device, for transporting the biochar out of the facility into the comminution device, via a transport means.

## Revendications

1. Dispositif de concassage facilement manipulable destiné à raffiner, de préférence à pulvériser, un biocharbon,
a. lequel comprend au moins, de préférence deux broyeurs à billes, dans lequel
b. le premier broyeur à billes destiné à fabriquer des particules de biocharbon comprend une entrée destinée à envoyer un récipient de broyage (3) au premier broyeur à billes avec un premier matériau à broyer, de préférence un biocharbon, et le récipient de broyage présentant une sortie avec un espace de broyage, au moins une unité d'entraînement (9) et un dispositif de séparation,
c. l'unité d'entraînement est couplée au récipient de broyage pour l'entraînement de celui-ci pour produire des déplacements du récipient de broyage, le récipient de broyage présente un fond et une paroi de récipient de broyage, la paroi de récipient de broyage est formée sur le fond,
d. au moins une partie du côté intérieur, tourné vers l'espace de broyage, de la paroi de récipient de broyage est configurée de manière cylindrique creuse,
e. une partie du fond du récipient de broyage est réalisée en tant que sortie destinée à transférer les particules de biocharbon,
f. la sortie présente un premier tamis (5) en tant que dispositif de séparation du premier broyeur à billes pour séparer les particules de biocharbon des résidus,
**caractérisé en ce que**
g. ladite sortie est reliée à une entrée d'un deuxième broyeur à billes par l'intermédiaire d'un conduit relié à la sortie,
h. les ajours du premier tamis du premier broyeur à billes coïncident entre eux, sont configurés vus d'en haut de manière allongée et angulaire et sont orientés de manière parallèle les uns par rapport aux autres,
i. la distance A des longues parois d'ajour opposées, délimitant les ajours, du premier tamis entre elles correspond une petite largeur ou à une distance de 1,1 à 6,0 mm, de préférence de 1,2 à 4,0 mm, de manière davantage préférée de 1,5 mm,
j. la distance B des courtes parois d'ajour opposées, délimitant les ajours, du premier tamis les unes des autres correspond à une petite largeur ou à une distance de 2,0 à 5,0 mm, de préférence de 2,5 à 4,0 mm, de manière davantage préférée de 3,0 à 3,5 mm,
k. le deuxième broyeur à billes comprend une entrée destinée à envoyer un récipient de broyage avec les particules de biocharbon hors du premier broyeur à billes et un récipient de broyage présentant une sortie avec un espace de broyage, une unité d'entraînement et un dispositif de séparation,
l. l'unité d'entraînement est couplée au récipient de broyage pour produire des déplacements du récipient de broyage, le récipient de broyage présente un fond et une paroi de récipient de broyage, et la paroi de récipient de broyage est formée sur le fond,
m. la paroi intérieure, tournée vers l'espace de broyage, de la paroi de récipient de broyage est configurée de manière bombée vers l'extérieur dans la section transversale, de préférence en forme de cercle partiel, par exemple une forme de demi-cercle,
n. la sortie présente un deuxième tamis en tant que dispositif de séparation destiné à classer les particules de biocharbon traitées,
o. le dispositif de séparation du deuxième broyeur à billes présente en tant que deuxième tamis une grille avec un matériau métallique et une couche de grille avec des matières plastiques,
p. laquelle grille repose sur le côté extérieur, tourné vers le récipient de broyage du deuxième broyeur à billes, de la couche de grille et présente des ajours carrés vus d'en haut,
q. les ajours coïncident entre eux et présentent en tant que dimensions C de 0,8 à 1,3 mm x 0,8 à 1,3 mm, de préférence de 1,0 à 1,2 x 1,0 à 1,2 mm, de manière davantage préférée 1,1 x 1,1 mm ou 1,1 x 1,1 mm,
r. les récipients de broyage contiennent des billes de broyage,
les billes de broyage du premier broyeur à billes présentent un diamètre identique au diamètre des billes de broyage du deuxième broyeur à billes ou un diamètre différent, de préférence les billes de broyage du premier broyeur à billes présentent un diamètre inférieur à celui des billes de broyage du deuxième broyeur à billes.

2. Dispositif de concassage facilement manipulable destiné à raffiner, de préférence à pulvériser, un biocharbon selon la revendication 1, **caractérisé en ce que** les billes de broyage du premier broyeur à billes présentent un diamètre de 1,8 à 2,8 cm ou de 2,0 à 2,5 cm, de préférence de 2,1 à 2,4 cm, de manière davantage préférée de 1,8 cm à 2,0 cm, ou de 2,1 cm ou de 2,3 cm, idéalement de 1,6 à 1,8 cm.

3. Dispositif de concassage facilement manipulable destiné à raffiner, de préférence à pulvériser, un biocharbon selon la revendication 1, **caractérisé en ce que** les billes de broyage du deuxième broyeur à billes présentent un diamètre de 0,8 cm à 2,8 cm ou de 1,2 cm à 2,5 cm, de préférence de 0,8 cm à 2,0 cm ou de 1,0 cm à 1,8 cm, de manière davantage préférée de 1,6 cm à 1,8 cm, de 1,2 cm à 1,4 cm ou de 1,6 cm ou de 1,7 cm ou de 1,8 cm.

4. Dispositif de concassage facilement manipulable destiné à raffiner, de préférence à pulvériser, un biocharbon selon la revendication 1, 2 ou 3, **caractérisé en ce que** les diamètres des billes de broyage du premier broyeur à billes coïncident avec le diamètre du deuxième broyeur à billes, le rapport du diamètre de l'espace intérieur dans la zone cylindrique creuse par rapport au diamètre du fond est de 1,47, le rapport du volume utile du récipient de broyage du premier broyeur à billes par rapport au volume utile du récipient de broyage du deuxième broyeur à billes est de 5,42, le rapport de la puissance d'entraînement des unités d'entraînement du premier broyeur à billes par rapport à la puissance d'entraînement des unités d'entraînement du deuxième broyeur à billes est de 25, la distance A des longues parois d'ajour opposées, délimitant les ajours, du premier tamis les unes des autres est de 6,5 ou 7,5 mm, la distance B des courtes parois d'ajours opposées, délimitant les ajours, du premier tamis les unes des autres est de 1,5 mm ou de 2,5 mm.

5. Dispositif de concassage facilement manipulable destiné à raffiner, de préférence à pulvériser, un biocharbon selon l'une quelconque des revendications 1 à 4, **caractérisé en ce que** les pores du tamis du deuxième broyeur à billes coïncident entre eux, sont réalisés en forme de cercle et présentent une petite largeur inférieure à 5 mm, de préférence de 0,1 mm à 2,5 mm, de manière davantage préférée de 0,1 à 1,0 mm.

6. Dispositif de concassage facilement manipulable destiné à raffiner, de préférence à pulvériser, un biocharbon selon l'une quelconque des revendications 1 à 5, **caractérisé en ce que** les fonds du récipient de broyage du premier et/ou du deuxième broyeur à billes se trouvent sur des ressorts hélicoïdaux, qui sont disposés sur un panneau d'appui, auquel l'axe d'entraînement ou l'arbre d'entraînement de l'unité d'entraînement est couplé de manière excentrique, par exemple au moyen d'une transmission.

7. Installation de pulvérisation de biocharbon destinée à fabriquer et à raffiner, par exemple à pulvériser, du biocharbon en poudre de biocharbon avec un dispositif de concassage facilement manipulable destiné à raffiner, de préférence à pulvériser, un biocharbon, selon l'une quelconque des revendications précédentes, dans laquelle le biocharbon à pulvériser dans le dispositif de concassage à envoyer au premier broyeur à billes à l'aide d'une installation de production continue de biocharbon à partir d'une particules de biomasse dans un matériau en vrac en tant que lit mobile est fabriqué au préalable dans un réacteur à puits,
dans laquelle
le réacteur à puits comprend une enveloppe de réacteur à puits comprenant une extrémité de tête et une extrémité de pied, destinée à recevoir le biocharbon,
au moins un dispositif de convoyage de particules destiné à acheminer les particules de biomasse dans le réacteur à puits,
au moins un dispositif de dosage pour ventilation destiné à amener l'air dans le réacteur à puits,
l'extrémité de tête du réacteur à puits présente une ouverture d'admission et l'extrémité de pied du réacteur à puits présente une ouverture de décharge, une section centrale se trouve entre l'extrémité de tête et l'extrémité de pied, une grille est disposée dans un intérieur du réacteur à puits dans une zone de transition entre la section centrale du réacteur à puits et l'extrémité de pied pour soutenir le matériau en vrac,
l'extrémité de pied du réacteur à puits présente le dispositif de dosage pour ventilation,
le dispositif de dosage pour ventilation présente une conduite tubulaire d'air et un tuyau extérieur,
le tuyau extérieur accueille une extrémité supérieure de la conduite tubulaire d'air, le tuyau extérieur est relié de manière mobile à la conduite tubulaire d'air,
la conduite tubulaire d'air est reliée à un tuyau extérieur d'air, par l'intermédiaire duquel de l'air peut être amené depuis l'extérieur,
le dispositif de convoyage de particules est disposé dans la zone de l'extrémité de tête, il comprend un dispositif de déversement, le dispositif de déversement présente une glissière inclinable progressivement pour la répartition homogène, contrôlée, radiale progressivement et l'envoi du matériau en vrac avec des particules de biomasse,
la glissière est réalisée de manière à pouvoir être inclinée autour d'un axe de pivotement horizontal orienté de manière transversale par rapport à l'axe de rotation vertical,
le dispositif de déversement présentant un dispositif d'entraînement principal est entraîné par le dispositif d'entraînement de manière à pouvoir tourner autour de l'axe de rotation vertical pour envoyer la surface du matériau en vrac dans la zone autour de l'axe de rotation vertical de celui-ci,
le contrôle de l'amenée de l'air dans le matériau en vrac en termes de quantité d'air et de zone est effectué par le dispositif de dosage pour ventilation,
la distance d'une extrémité supérieure du tuyau extérieur par rapport au côté inférieur de la grille peut être fixée et le tuyau extérieur peut être coulissé de manière transversale par rapport à un axe longitudinal médian A du réacteur à puits,
un dispositif de collecte disposé à distance de la grille est disposé sous ou en dessous du dispositif de dosage pour ventilation pour refroidir le biocharbon déplacé hors de l'ouverture de décharge du réacteur à puits,
le dispositif de collecte est relié à l'entrée du dispositif de concassage pour envoyer le récipient de broyage (3) du premier broyeur à billes au dispositif de concassage pour le transport du biocharbon depuis l'installation dans le dispositif de concassage par l'intermédiaire d'un dispositif de transport.
